(19) Europäisches Patentamt / European Patent Office / Office européen des brevets

(11) **EP 3 689 029 B1**

(12) **FASCICULE DE BREVET EUROPEEN**

(45) Date de publication et mention de la délivrance du brevet:
**15.09.2021 Bulletin 2021/37**

(21) Numéro de dépôt: **18772812.6**

(22) Date de dépôt: **25.09.2018**

(51) Int Cl.:
*H04W 36/00* (2009.01)     *H04W 84/12* (2009.01)
*H04L 12/28* (2006.01)

(86) Numéro de dépôt international:
**PCT/EP2018/076003**

(87) Numéro de publication internationale:
**WO 2019/063564 (04.04.2019 Gazette 2019/14)**

(54) **PROCEDE D'AIDE A UN BASCULEMENT DE TERMINAL MOBILE ENTRE RESEAUX LOCAUX SANS-FIL COMMUNAUTAIRES**

VERFAHREN ZUR UNTERSTÜTZUNG DER UMSCHALTUNG EINES MOBILEN ENDGERÄTS ZWISCHEN DRAHTLOSEN LOKALEN NETZWERKEN EINER GEMEINSCHAFT

METHOD OF AIDING TOGGLING OF A MOBILE TERMINAL BETWEEN COMMUNITY WIRELESS LOCAL AREA NETWORKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2017 FR 1759131**

(43) Date de publication de la demande:
**05.08.2020 Bulletin 2020/32**

(73) Titulaire: **Sagemcom Broadband SAS 92500 Rueil-Malmaison (FR)**

(72) Inventeurs:
• **GRAUL, Alexis**
  **92500 Rueil Malmaison (FR)**
• **LALAM, Massinissa**
  **92500 Rueil Malmaison (FR)**

(74) Mandataire: **Cabinet Le Guen Maillet 3, impasse de la Vigie CS 71840 35418 Saint-Malo Cedex (FR)**

(56) Documents cités:
**WO-A1-2006/013533     FR-A1- 2 832 895 US-A1- 2007 076 662**

• **NAM NGUYEN ET AL: "A Novel WLAN Roaming Decision and Selection Scheme for Mobile Data Offloading", JOURNAL OF ELECTRICAL AND COMPUTER ENGINEERING, vol. 2015, 1 janvier 2015 (2015-01-01), pages 1-15, XP055429536, United States ISSN: 2090-0147, DOI: 10.1155/2015/324936**

**Description**

La présente invention concerne un procédé d'aide au basculement d'un terminal mobile depuis un réseau local sans-fil vers un autre réseau local sans-fil d'une même communauté.

La mise en place de réseaux locaux sans-fil WLAN (« Wireless Local Area Network » en anglais) offre une grande flexibilité aux utilisateurs de dispositifs de communication nomades, tels que des ordinateurs, des tablettes, des téléphones intelligents, etc. De tels réseaux WLAN sont par exemple établis par des points d'accès intégrés dans des passerelles résidentielles RGW (« Residential GateWay » en anglais) mises à disposition par des opérateurs de télécommunications à des utilisateurs leur ayant souscrit un abonnement. Ainsi, outre la connectivité locale apportée par ces réseaux WLAN, ces utilisateurs peuvent également accéder à des services de réseaux étendus WAN (« Wide Area Network » en anglais), comme par exemple Internet, par le biais de leurs passerelles résidentielles RGW et de terminaux mobiles.

De plus, les opérateurs de télécommunications déploient dans les lieux publics des infrastructures de réseaux sans-fils, telles que des réseaux WLAN de type Wi-Fi (s'appuyant sur la famille de standards IEEE 802.11), afin de pouvoir garantir un accès à de tels réseaux étendus WAN à leurs abonnés et leur fournir une connectivité dans ces zones denses. On parle de « Hot-Spot ».

Afin d'étendre la couverture, les passerelles résidentielles RGW sont mises à contribution. De telles passerelles résidentielles RGW mettent alors en place au moins deux réseaux WLAN, au moins un réseau WLAN privé dont l'accès est restreint à l'abonné détenteur de la passerelle résidentielle RGW et au moins un réseau WLAN public ouvert à tous les abonnés de l'opérateur gérant la passerelle résidentielle RGW.

Dans le cas de réseaux WLAN publics on parle de « réseaux WLAN communautaires ». Par extension, on parle de « réseaux Wi-Fi communautaires » pour des réseaux WLAN publics de type Wi-Fi.

Un usager connecté par le biais de son terminal mobile, appelé *station,* à un réseau WLAN communautaire peut, en se déplaçant, se trouver hors de portée du point d'accès qui gère ledit réseau WLAN communautaire et perdre ainsi la connectivité au réseau étendu WAN. Dans ces conditions, la station va alors d'elle-même tenter de se reconnecter à un autre point d'accès dont elle dispose des droits d'accès. La reconnexion peut prendre plusieurs secondes et entraîner ainsi une perte momentanée de connectivité au réseau étendu WAN. Contrairement à un réseau de téléphonie cellulaire où le terminal mobile est entièrement sous contrôle d'un réseau cœur, la philosophie des réseaux WLAN est de laisser la gestion de la connectivité au terminal mobile.

Il est connu le document WO 2006/013533 A1, qui divulgue un système et un procédé d'équilibrage de la charge dans un réseau local LAN (« Local Area Network » en anglais).

Il est aussi connu le document « A Novel WLAN roaming décision and Selection Scheme for Mobile Data Offloading», Nam Nguyen et al, Journal of Electrical and Computer Engineering, December 2015, pp 1-15, qui divulgue un schéma de décision de basculement entre Wi-Fi et réseau de téléphonie cellulaire, et de sélection de point d'accès, basé sur les standards 3GPP TS24.312 and IEEE 802.11u,k.

Il est aussi connu le document US 2007/076662 A1, qui divulgue un procédé de basculement d'un terminal de communication mobile entre des points d'accès dans un réseau WLAN.

Il est aussi connu le document FR 2832895 A1, qui divulgue un système de télécommunication incluant un gestionnaire de mobilité apte à déterminer, en fonction de conditions de fonctionnement des points d'accès, avec quel point d'accès un terminal mobile doit établir une communication. Un basculement de point est décidé, ou pas, après analyse de l'environnement propre au terminal mobile par le gestionnaire de mobilité.

Il est souhaitable de pallier ces inconvénients de l'état de la technique. Il est ainsi souhaitable de fournir une solution qui facilite le basculement (« roaming » en anglais) d'un terminal mobile depuis un réseau WLAN communautaire géré par un opérateur vers un autre réseau WLAN communautaire géré le même opérateur (c'est-à-dire des réseaux WLAN appartenant à une même communauté), afin de minimiser, préférentiellement d'éviter, la perte de connectivité au réseau étendu WAN pour ledit terminal mobile. La solution doit toutefois prendre en compte la philosophie des réseaux WLAN évoquée ci-dessus, à savoir de laisser la gestion de la connectivité au terminal mobile.

L'invention concerne un procédé d'aide au basculement d'un terminal mobile depuis un premier réseau local sans-fil communautaire vers un second réseau local sans-fil communautaire, les premier et second réseaux locaux sans-fil appartenant à une même communauté et étant gérés par respectivement des premier et second points d'accès offrant un accès à un réseau étendu via lequel est accessible un serveur régissant ladite communauté. Le procédé est tel que le premier point d'accès implémente les étapes suivantes : effectuer des mesures de qualité de communication avec ledit terminal mobile et/ou de charge opérationnelle dudit premier point d'accès ; lorsque les mesures indiquent que la qualité de communication avec ledit terminal mobile est inférieure à un premier seuil S2 et/ou respectivement que la charge opérationnelle dudit premier point d'accès est supérieure à un second seuil S2', déclencher une procédure de sélection assistée par le serveur ; lorsque les mesures indiquent que la qualité de communication avec ledit terminal mobile est inférieure à un troisième seuil S3 qui est inférieur au premier seuil S2 et/ou respectivement que la charge opérationnelle dudit premier point d'accès est supérieure à un quatrième seuil S3' qui est supérieur au second seuil S2', déclencher une procédure de sélection autonome ; à l'issue de la procédure de sélection assistée par le serveur ou de la procédure de sélection autonome, transmettre au terminal mobile une liste pondérée Ld de points d'accès candidats au basculement dudit terminal mobile. De plus, dans la procédure de sélection assistée, le premier point d'accès construit la liste pondérée Ld en effectuant une pondération prenant en compte des mesures de charge opérationnelle instantanées desdits points d'accès candidats fournies par le serveur suite au déclenchement de la procédure de sélection assistée, et, dans la procédure de sélection autonome, le premier point d'accès construit la liste pondérée Ld en effectuant une pondération prenant en compte des statistiques à long-terme de charge opérationnelle desdits points d'accès candidats fournies précédemment par le serveur.

Ainsi, le basculement du terminal mobile depuis le premier réseau local sans-fil communautaire vers le second réseau local sans-fil communautaire est facilité, plus particulièrement en ce qui concerne le choix du second réseau local sans-fil communautaire par le terminal mobile. La transmission de la liste pondérée Ld anticipe la perte de connectivité du terminal mobile, tout en laissant la gestion de la connectivité au terminal mobile.

Selon un mode de réalisation particulier, le premier point d'accès reçoit périodiquement des mises à jour des statistiques long-terme en provenance du serveur.

Selon un mode de réalisation particulier, le premier point d'accès implémente les étapes suivantes : lorsque les mesures indiquent que la qualité de communication avec ledit terminal mobile est inférieure à un cinquième seuil S1 qui est supérieur ou égal au premier seuil S2 et/ou respectivement que la charge opérationnelle dudit premier point d'accès est supérieure à un sixième seuil S1' qui est inférieur ou égal au second seuil S2', demander audit terminal mobile un rapport de balayage indiquant quels points d'accès sont détectés par ledit terminal mobile ; et effectuer la pondération prenant en compte le rapport de balayage reçu du terminal mobile.

Selon un mode de réalisation particulier, le premier point d'accès liste dans la liste pondérée Ld uniquement des points d'accès détectés par ledit terminal mobile et qui sont indiqués dans le rapport de balayage.

Selon un mode de réalisation particulier, le premier point d'accès effectue les étapes suivantes : recevoir en provenance du serveur une liste L de points d'accès gérant des réseaux locaux sans-fil communautaires appartenant à ladite communauté et dont l'adresse géographique se situe dans un rayon prédéfini dudit premier point d'accès ; effectuer un balayage pour créer une liste Lap identifiant quels points d'accès de la liste L sont à portée radio dudit premier point d'accès et une liste Lhp identifiant quels points d'accès de la liste L sont hors de portée radio dudit premier point d'accès ; effectuer une pondération initiale en se basant sur les listes Lap et Lhp.

Selon un mode de réalisation particulier, le premier point d'accès effectue les étapes suivantes : créer une liste Lab identifiant des points d'accès appartenant à ladite communauté qui ont été détectés par ledit premier point d'accès lors du balayage par ledit premier point d'accès et qui n'étaient pas listés dans la liste L ; transmettre la liste Lab au serveur.

Selon un mode de réalisation particulier, dans la procédure de sélection assistée, le serveur effectue les étapes suivantes : demander à chaque point d'accès dans la liste L de fournir des mesures de charge opérationnelle instantanées dudit point d'accès, et de fournir une information indiquant si ledit point d'accès détecte ledit terminal mobile ; et informer ledit premier point d'accès des mesures de charge opérationnelle instantanées reçues desdits points d'accès et fournir les informations indiquant respectivement si lesdits point d'accès ont détecté ledit terminal mobile.

Selon un mode de réalisation particulier, dans la procédure de sélection assistée, le premier point d'accès associe à chaque point d'accès listé dans la liste pondérée Ld un poids P calculé à partir d'un ensemble de métriques de la façon suivante : le poids P dépend du poids attribué audit point d'accès lors de la pondération initiale et/ou du poids dernièrement attribué audit point d'accès lors de la dernière création de liste pondérée Ld par le premier point d'accès ; le poids P dépend de la charge opérationnelle d'une interface de communication côté réseau étendu dudit point d'accès ; le poids P dépend de la charge opérationnelle d'une interface de communication côté réseau local sans-fil communautaire dudit point d'accès ; le poids P dépend d'un niveau de signal RSSI (« Received Signal Strength Indicator » en anglais) avec lequel ledit point d'accès détecte ledit terminal mobile ; le poids P dépend d'un niveau de signal RSSI avec lequel ledit terminal mobile détecte ledit point d'accès AP d'après le rapport de balayage reçu dudit terminal mobile.

Selon un mode de réalisation particulier, ledit poids P dépend en outre d'un taux d'opérations de basculement précédemment réalisées avec succès depuis le premier point d'accès vers le point d'accès auquel le poids P est associé.

Selon un mode de réalisation particulier, lorsque le rapport de balayage demandé audit terminal mobile n'est pas disponible, le poids P dépend de l'inverse de la valeur absolue de la différence entre un niveau de signal RSSI mesuré par le premier point d'accès pour des signaux en provenance dudit point d'accès auquel le poids P est associé et un niveau de signal RSSI mesuré par le premier point d'accès pour des signaux en provenance dudit terminal mobile.

Selon un mode de réalisation particulier, dans la procédure de sélection autonome, le premier point d'accès associe à chaque point d'accès listé dans la liste pondérée Ld un poids P' calculé à partir d'un ensemble de métriques de la façon suivante : le poids P' dépend d'une statistique de charge de l'interface de communication côté réseau étendu dudit point d'accès ; le poids P' dépend d'une statistique de charge de l'interface de communication côté réseau local sans-fil communautaire dudit point d'accès ; le poids P' dépend d'un niveau de signal RSSI avec lequel ledit terminal mobile détecte ledit point d'accès d'après le rapport de balayage reçu dudit terminal.

Selon un mode de réalisation particulier, ledit poids P' dépend en outre d'un taux d'opérations de basculement précédemment réalisées avec succès depuis le premier point d'accès vers le point d'accès auquel le poids P' est associé.

Selon un mode de réalisation particulier, après basculement du terminal mobile, le second point d'accès informe le serveur dudit basculement, et le serveur informe ensuite le premier point d'accès dudit basculement.

Selon un mode de réalisation particulier, lorsque le rapport de balayage demandé audit terminal mobile n'est pas disponible, le poids P' dépend de l'inverse de la valeur absolue de la différence entre un niveau de signal RSSI mesuré par le premier point d'accès pour des signaux en provenance dudit point d'accès auquel le poids P' est associé et un niveau de signal RSSI mesuré par le premier point d'accès pour des signaux en provenance dudit terminal mobile.

Selon un mode de réalisation particulier, les premier et second réseaux locaux sans-fil communautaires sont de type Wi-Fi.

L'invention concerne également un produit programme d'ordinateur comprenant des instructions pour implémenter, par un processeur, les étapes du procédé effectuées par le premier point d'accès, lorsque ledit programme est exécuté par ledit processeur. L'invention concerne également un support de stockage d'informations stockant un tel produit programme d'ordinateur.

L'invention concerne également un point d'accès, dit premier point d'accès, configuré pour aider au basculement d'un terminal mobile depuis un premier réseau local sans-fil communautaire vers un second réseau local sans-fil communautaire, les premier et second réseaux locaux sans-fil appartenant à une même communauté et étant gérés par respectivement le premier point d'accès et un second point d'accès, les premier et second points d'accès offrant un accès à un réseau étendu via lequel est accessible un serveur régissant ladite communauté. Le premier point d'accès implémente : des moyens pour effectuer des mesures de qualité de communication avec ledit terminal mobile et/ou de charge opérationnelle dudit premier point d'accès ; lorsque les mesures indiquent que la qualité de communication avec ledit terminal mobile est inférieure à un premier seuil S2 et/ou respectivement que la charge opérationnelle dudit premier point d'accès est supérieure à un second seuil S2', des moyens pour déclencher une procédure de sélection assistée par le serveur ; lorsque les mesures indiquent que la qualité de communication avec ledit terminal mobile est inférieure à un troisième seuil S3 qui est inférieur au premier seuil S2 et/ou respectivement que la charge opérationnelle dudit premier point d'accès est supérieure à un quatrième seuil S3' qui est supérieur au second seuil S2', des moyens pour déclencher une procédure de sélection autonome ; à l'issue de la procédure de sélection assistée par le serveur ou de la procédure de sélection autonome, des moyens pour transmettre au terminal mobile une liste pondérée Ld de points d'accès candidats au basculement dudit terminal mobile. De plus, dans la procédure de sélection assistée, le premier point d'accès implémente des moyens pour construire la liste pondérée Ld en effectuant une pondération prenant en compte des mesures de charge opérationnelle instantanées desdits points d'accès candidats fournies par le serveur suite au déclenchement de la procédure de sélection assistée, et, dans la procédure de sélection autonome, le premier point d'accès implémente des moyens pour construire la liste pondérée Ld en effectuant une pondération prenant en compte des statistiques à long-terme de charge opérationnelle desdits points d'accès candidats fournies précédemment par le serveur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système de communication dans lequel la présente invention peut être implémentée ;
- la Fig. 2 illustre schématiquement un exemple d'architecture matérielle utilisable dans le système de communication ;
- la Fig. 3 illustre schématiquement des échanges de messages dans le cadre d'une collecte de mesures effectuées par des points d'accès du système de communication ;
- la Fig. 4 illustre schématiquement des échanges de messages dans le cadre d'une mise à disposition de statistiques construites par un serveur du système de communication ;
- la Fig. 5 illustre schématiquement des échanges de messages dans le cadre d'une initialisation de listes relatives à des points d'accès dans le voisinage d'un autre point d'accès ;
- la Fig. 6 illustre schématiquement un algorithme d'aide au basculement d'un terminal mobile depuis un premier réseau WLAN communautaire vers un second réseau WLAN communautaire, l'algorithme étant implémenté par un point d'accès gérant le premier réseau WLAN communautaire, selon un premier mode de réalisation ;
- la Fig. 7 illustre schématiquement un algorithme d'aide au basculement d'un terminal mobile depuis le premier réseau WLAN communautaire vers le second réseau WLAN communautaire, l'algorithme étant implémenté par le point d'accès gérant le premier réseau WLAN communautaire, selon un second mode de réalisation ;
- la Fig. 8 illustre schématiquement des échanges de messages dans le cadre d'une procédure de sélection de réseaux WLAN candidats au basculement assistée par le serveur du système de communication ;
- les Figs. 9A et 9B illustrent schématiquement un algorithme de suivi de basculement du terminal mobile depuis le premier réseau WLAN communautaire vers le second réseau WLAN communautaire, l'algorithme étant implémenté par le point d'accès gérant le premier réseau WLAN communautaire ; et

- la Fig. 10 illustre schématiquement des échanges de messages dans le cadre du basculement du terminal mobile depuis le premier réseau WLAN communautaire vers le second réseau WLAN communautaire.

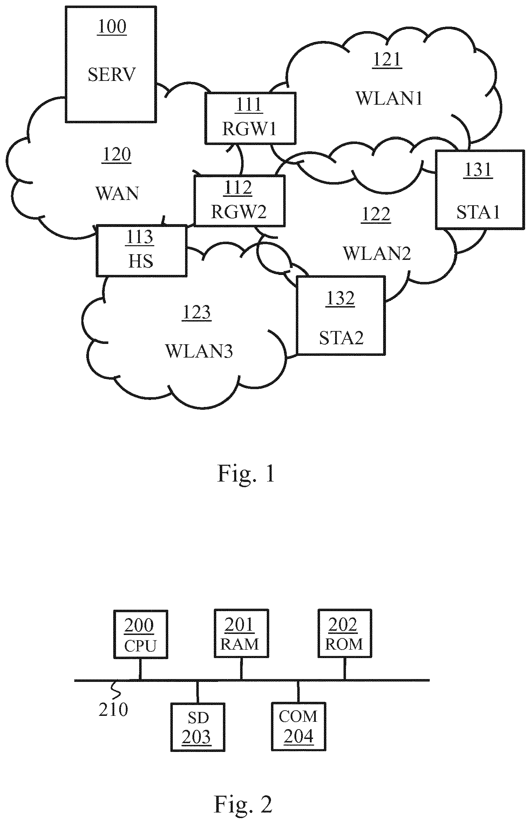

La **Fig. 1** illustre schématiquement un système de communication dans lequel la présente invention peut être implémentée.

Le cadre de la présente invention est celui d'un déploiement de réseaux WLAN communautaires WLAN1 121, WLAN2 122, WLAN3 123 par un opérateur de communication. Ces réseaux WLAN communautaires WLAN1 121, WLAN2 122, WLAN3 123 ont pour but de permettre un accès à des services offerts par un réseau étendu WAN 120, tel qu'Internet, à des abonnés de l'opérateur de communication. Ces réseaux WLAN communautaires WLAN1 121, WLAN2 122, WLAN3 123 appartiennent par définition à une même communauté, régie par l'opérateur en question. Ainsi, seuls les abonnés de la communauté peuvent accéder aux services offerts via ces réseaux WLAN communautaires WLAN1 121, WLAN2 122, WLAN3 123.

Ces réseaux WLAN communautaires sont mis en place et gérés par des points d'accès AP (« Access Point » en anglais) respectifs. Ces points d'accès AP sont, selon une première possibilité, des points d'accès dédiés installés par l'opérateur lui-même dans des zones publiques (e.g. gare, square, ...) et créent ainsi des réseaux WLAN communautaires de type « Hot-Spot ». C'est le cas du point d'accès HS 113 sur la Fig. 1, qui gère le réseau WLAN communautaire WLAN3 123. Ces points d'accès AP sont, selon une seconde possibilité, des points d'accès intégrés à des passerelles résidentielles RGW fournies par l'opérateur et installés par des abonnés dans des zones privées (habitations,...). C'est le cas de points d'accès AP intégrés à des passerelles résidentielles RGW1 111, RGW2 112 sur la Fig. 1, qui gèrent respectivement les réseaux WLAN communautaires WLAN1 121, WLAN2 122.

Pour les réseaux WLAN communautaires de type « Hot-Spot », l'opérateur a une connaissance exacte de la localisation géographique des points d'accès AP gérant lesdits réseaux WLAN communautaires, ainsi que de la portée théorique radio desdits points d'accès AP. En ce qui concerne les réseaux WLAN communautaires mis en place grâce à des passerelles résidentielles RGW, l'opérateur ne sait généralement pas où les abonnés concernés ont exactement installé lesdites passerelles résidentielles RGW, mais l'opérateur a connaissance des adresses civiles desdits abonnés où lesdites passerelles résidentielles RGW sont supposées être installées.

La Fig. 1 illustre ainsi schématiquement un système de communication dans lequel des terminaux mobiles, aussi appelés stations STA, tels que les terminaux mobiles STA1 131, STA2 132, peuvent accéder à des services offerts par le réseau étendu WAN 120 via des réseaux WLAN communautaires, tels que les réseaux WLAN communautaires WLAN1 121, WLAN2 122, WLAN3 123.

Les points d'accès AP, tels que le point d'accès HS 113 et les points d'accès AP intégrés aux passerelles résidentielles RGW1 111, RGW2 112, sont configurés pour implémenter un procédé d'aide au basculement depuis leur réseau WLAN communautaire vers un autre réseau WLAN communautaire (de la même communauté). Ce procédé, détaillé ci-après, permet aux terminaux mobiles, tels que les terminaux mobiles STA1 131, STA2 132, de recevoir des informations pondérées leur permettant de prendre une décision quant au choix du réseau WLAN communautaire vers lequel basculer, lorsque le réseau WLAN communautaire auquel lesdits terminaux mobiles sont connectés ne permet plus d'assurer dans de bonnes conditions la connectivité au réseau étendu WAN 120.

Dans le cadre du procédé d'aide au basculement, les points d'accès AP en question s'appuient sur un serveur SERV 100 rendu accessible auxdits points d'accès AP via le réseau étendu WAN 120. Le serveur SERV 100 a connaissance des points d'accès AP gérant les réseaux WLAN communautaires de la communauté régie par ledit serveur SERV 100. Comme détaillé ci-après, le serveur SERV 100 assiste les points d'accès AP de la communauté pour aider les terminaux mobiles ayant droit de se connecter aux réseaux WLAN communautaires de ladite communauté à basculer depuis un dit réseau WLAN communautaire vers un autre dit réseau WLAN communautaire.

Le serveur SERV 100 est en charge de l'authentification des utilisateurs qui se connectent aux points d'accès AP de la communauté régie par ledit serveur SERV 100. Cette authentification s'appuie sur un échange de messages entre lesdits points d'accès AP et le serveur SERV 100 lorsque lesdits points d'accès AP détectent des tentatives de connexion des terminaux mobiles concernés aux réseaux WLAN communautaires gérés par lesdits points d'accès AP. Cette authentification s'appuie sur des informations d'authentification fournies par lesdits terminaux mobiles, comme largement répandu dans les réseaux de communication sans-fil actuels. Chaque point d'accès AP de la communauté peut en outre transmettre périodiquement au serveur SERV 100 la liste des terminaux mobiles qui lui sont connectés.

La **Fig. 2** illustre schématiquement un exemple d'architecture matérielle d'une passerelle résidentielle RGW utilisée dans le système de communication de la Fig. 1. L'exemple d'architecture matérielle de la Fig. 2 est aussi applicable aux points d'accès de type « Hot-Spot ». L'exemple d'architecture matérielle de la Fig. 2 est aussi applicable au serveur SERV 100.

L'exemple d'architecture matérielle présenté comporte, reliés par un bus de communication 210 : un processeur CPU (« Central Processing Unit » en anglais) 200 ; une mémoire vive RAM (« Random Access Memory» en anglais) 201 ; une mémoire morte ROM (« Read Only Memory » en anglais) 202 ; une unité de stockage ou un lecteur de support de stockage, tel qu'un lecteur de cartes SD (« Secure Digital » en anglais) 203 ou un disque dur HDD (« Hard Disk Drive » en anglais) ; et au moins une interface de communication COM 204.

Lorsque l'architecture matérielle représente une passerelle résidentielle RGW, une interface de communication COM 204 permet à la passerelle résidentielle RGW de communiquer via le réseau étendu WAN 120, et au moins une interface de communication COM 204 permet de créer et gérer au moins un réseau WLAN communautaire respectif, et préférentiellement au moins une interface de communication COM 204 permet de créer et gérer au moins un réseau WLAN privé.

Lorsque l'architecture matérielle représente un point d'accès AP de type « Hot-Spot », une interface de communication COM 204 permet audit point d'accès AP de communiquer via le réseau étendu WAN 120, et au moins une interface de communication COM 204 permet de créer et gérer au moins un réseau WLAN communautaire respectif.

Lorsque l'architecture matérielle représente le serveur SERV 100, une interface de communication COM 204 permet au serveur SERV de communiquer via le réseau étendu WAN 120.

Le processeur CPU 200 est capable d'exécuter des instructions chargées dans la mémoire RAM 201 à partir de la mémoire ROM 202, d'une mémoire externe (telle qu'une carte SD), d'un support de stockage (tel qu'un disque dur HDD), ou d'un réseau de communication (tel que le réseau étendu WAN 120). Lors de la mise sous tension, le processeur CPU 200 est capable de lire de la mémoire RAM 201 des instructions et de les exécuter. Ces instructions forment un programme d'ordinateur causant la mise en œuvre, par le processeur CPU 200, de tout ou partie des algorithmes et étapes décrits ci-après en relation avec le dispositif que ladite architecture matérielle représente.

Ainsi, tout ou partie des algorithmes et étapes décrits ci-après peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, le serveur SERV 100 et les passerelles résidentielles RGW du système de communication, ainsi que les points d'accès AP de type « Hot-Spot », comportent de la circuiterie électronique adaptée pour implémenter les algorithmes et étapes décrits ci-après.

A noter que les terminaux mobiles peuvent suivre la même architecture matérielle.

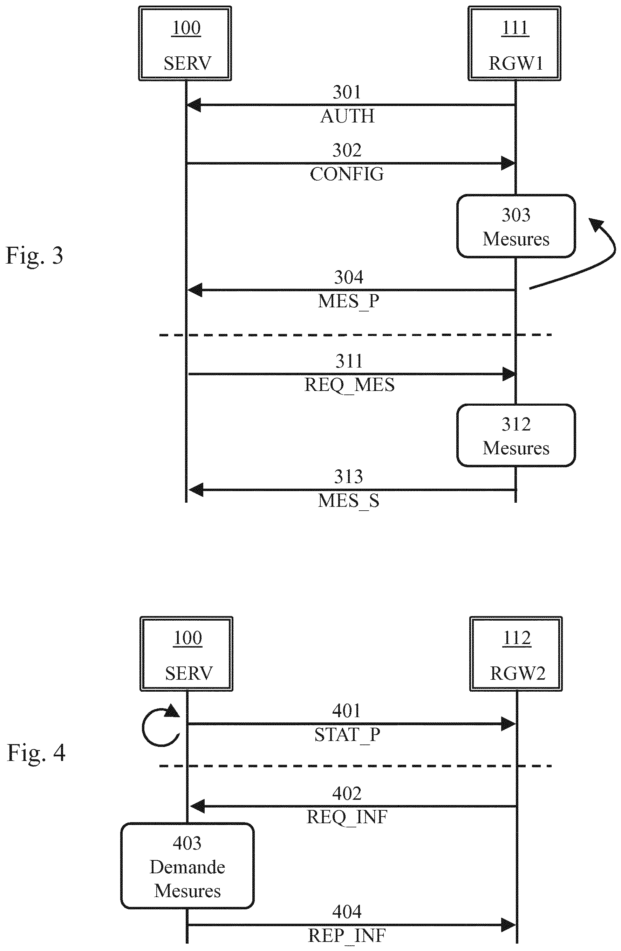

La **Fig. 3** illustre schématiquement des échanges de messages dans le cadre d'une collecte de mesures effectuées par des points d'accès AP du système de communication. Ces échanges permettent au serveur SERV 100 de connaître la charge opérationnelle des points d'accès AP à un instant t. Ces échanges permettent notamment de construire des statistiques qui servent ensuite à assister les points d'accès AP de la communauté pour aider les terminaux mobiles à basculer depuis un dit réseau WLAN communautaire vers un autre dit réseau WLAN communautaire.

Considérons à titre illustratif que le point d'accès AP considéré dans le cadre de l'algorithme de la Fig. 3 est intégré à la passerelle résidentielle RGW1 111. L'algorithme de la Fig. 3 est toutefois implémenté par chaque point d'accès AP de la communauté.

Dans une étape 301, le point d'accès AP de la passerelle résidentielle RGW1 111 est activé et la passerelle résidentielle RGW1 111 envoie un message d'authentification AUTH au serveur SERV 100. L'adresse du serveur SERV 100 est connue (par exemple définie en usine) de la passerelle résidentielle RGW1. L'authentification de la passerelle résidentielle RGW1 111 auprès du serveur SERV 100 peut consister en un échange d'une pluralité de messages. Cette authentification s'appuie sur des informations d'authentification fournies par la passerelle résidentielle RGW1 111, comme largement répandu dans les réseaux de communication actuels.

Dans une étape 302, suite à l'authentification réussie de la passerelle résidentielle RGW1 111, le serveur SERV 100 envoie un message de configuration CONFIG à la passerelle résidentielle RGW1 111. Par le biais du message CONFIG, le serveur SERV 100 instruit la passerelle résidentielle RGW1 111 d'effectuer des mesures de charge opérationnelle de ladite passerelle résidentielle RGW 111 et de lui transmettre périodiquement des rapports de mesures. Le message CONFIG peut en outre fournir à la passerelle résidentielle RGW1 111 un identifiant de la communauté à laquelle appartient chaque réseau WLAN communautaire à gérer par ladite passerelle résidentielle RGW1 111, ainsi qu'un identifiant de réseau de chaque dit réseau WLAN communautaire. L'identifiant réseau de chaque dit réseau WLAN communautaire est par exemple un identifiant SSID (« Service Set Identifier » en anglais).

Les mesures de charge opérationnelle sont des mesures de taux d'occupation de processeurs ou composants internes à ladite passerelle résidentielle RGW1 111 et/ou des mesures de charge de chaque interface de communication côté WLAN et/ou de son interface de communication côté WAN.

La charge opérationnelle côté WLAN peut correspondre à un débit moyen dans le sens montant et descendant sur une période prédéfinie qui peut être configurable par le serveur SERV 100 grâce au message CONFIG et/ou au débit réel dans le sens montant et descendant par rapport à un débit maximal disponible relevé sur une période prédéfinie qui peut être configurable par le serveur SERV 100 grâce au message CONFIG et/ou à une quantité de terminaux mobiles effectivement connectés sur ledit réseau WLAN et/ou à une qualité de service QoS (« Quality of Service » en anglais) de transmissions en cours sur ledit réseau WLAN. En ce qui concerne la qualité de service QoS, les statistiques de chaque catégorie d'accès AC (« Access Category » en anglais) utilisée, telle que définie par l'amendement IEEE 802.11e ou la certification WMM (« Wireless Multi-Media » en anglais) de l'organisation Wi-Fi Alliance, peuvent être utilisées.

La charge opérationnelle côté WAN peut correspondre au débit moyen dans le sens montant et descendant sur une période prédéfinie qui peut être configurable par le serveur SERV 100 grâce au message CONFIG et/ou au débit réel dans le sens montant et descendant par rapport à un débit maximal disponible sur une période prédéfinie qui peut être configurable par le serveur SERV 100 grâce au message CONFIG et/ou au débit disponible alloué à toute transmission en provenance ou à destination d'un réseau WLAN communautaire par rapport à un débit maximal disponible.

Dans une étape 303, la passerelle résidentielle RGW1 111 effectue les mesures requises par le serveur SERV 100, et dans une étape 304, la passerelle résidentielle RGW1 111 envoie en conséquence un rapport de mesures dans un message MES_P à destination du serveur SERV 100. Les étapes 303 et 304 sont réitérées de sorte à ce que le serveur SERV 100 reçoit périodiquement un tel rapport de mesures en provenance de la passerelle résidentielle RGW1 111.

En complément, le serveur SERV 100 obtient de tels rapports de mesures en provenance de la passerelle résidentielle RGW1 111 à la demande. Ainsi, dans une étape 311, le serveur SERV 100 envoie un message de requête REQ_MES à la passerelle résidentielle RGW1 111. Par le biais du message REQ_MES, le serveur SERV 100 instruit la passerelle résidentielle RGW1 111 d'effectuer des mesures de charge opérationnelle et de lui transmettre en retour un rapport de mesures. Dans une étape 312, la passerelle résidentielle RGW1 111 effectue alors les mesures requises par le serveur SERV 100, et dans une étape 313, la passerelle résidentielle RGW1 111 envoie en conséquence un rapport de mesures dans un message MES_S à destination du serveur SERV 100.

La **Fig. 4** illustre schématiquement des échanges de messages dans le cadre d'une mise à disposition de statistiques construites par le serveur SERV 100. Ces statistiques servent à assister les points d'accès AP de la communauté pour aider les terminaux mobiles à basculer depuis un dit réseau WLAN communautaire vers un autre dit réseau WLAN communautaire. Ces statistiques sont construites à partir des mesures de charge opérationnelle reçues par le serveur SERV 100 en provenance de chacun des points d'accès AP de la communauté sur le long-terme. Ces statistiques indiquent un taux moyen à long-terme de charge opérationnelle pour chaque point d'accès AP de la communauté. Ce taux moyen de charge opérationnelle peut être présenté sous forme d'histogramme dont les classes (« bins » en anglais) définissent des tranches temporelles (découpage par jour, par heure,...).

Considérons à titre illustratif que le point d'accès AP considéré dans le cadre de l'algorithme de la Fig. 4 est intégré à la passerelle résidentielle RGW2 112.

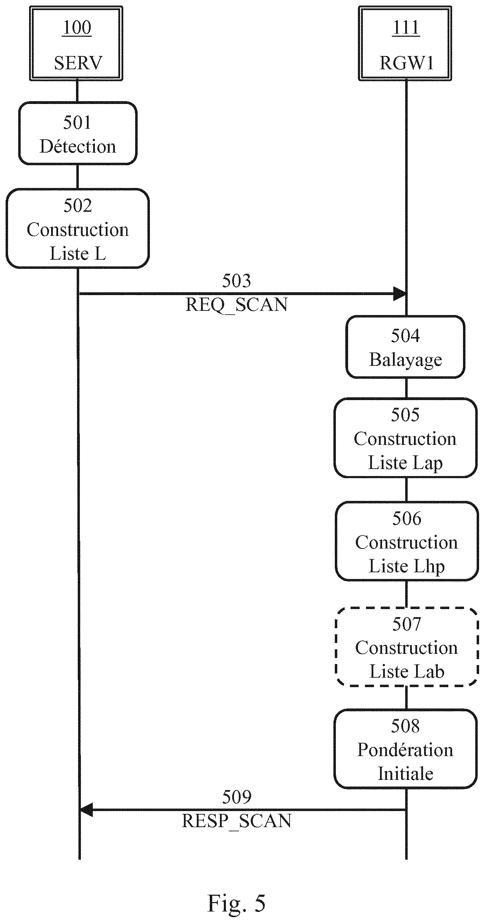

Le serveur SERV 100 est configuré pour transmettre périodiquement des statistiques à chaque point d'accès AP de la communauté. Ainsi, dans une étape 401, le serveur SERV 100 envoie, de manière périodique, un message STAT_P à la passerelle résidentielle RGW2 112. Le message STAT_P inclut les statistiques à long-terme susmentionnées. Le serveur SERV 100 fait de même pour chaque autre point d'accès AP de la communauté. Afin de ne pas surcharger le trafic à destination de chaque point d'accès AP, seules les statistiques de certains points d'accès AP de la communauté sont transmises périodiquement à un point d'accès AP donné (e.g. ceux à proximité, voir liste L dont la construction est détaillée ci-après en relation avec la Fig. 5).

En complément, la passerelle résidentielle RGW2 112 obtient des informations, comme par exemple de telles statistiques, de la part du serveur SERV 100, à la demande. Ces informations peuvent porter sur des mesures instantanées faites par les points d'accès AP de la communauté, afin de connaître leurs charges opérationnelles actuelles respectives, mais peuvent aussi porter sur des statistiques à long-terme. Considérons le cas où la passerelle résidentielle RGW2 112 souhaite obtenir des statistiques à long-terme. Alors, dans une étape 402, la passerelle résidentielle RGW2 112 envoie un message de requête REQ_INF au serveur SERV 100. En réponse au message REQ_INF, le serveur SERV 100 demande auprès des autres points d'accès AP de la communauté, dans une étape 403, d'effectuer des mesures de charge opérationnelle, comme déjà décrit en relation avec la Fig. 3 si le serveur SERV 100 ne dispose pas de suffisamment de mesures de charge opérationnelle afin d'en dériver des statistiques suffisantes. Le serveur SERV 100 limite sa demande aux points d'accès AP de la communauté qui sont dans le voisinage de la passerelle résidentielle RGW2 112 (voir liste L dont la construction est détaillée ci-après en relation avec la Fig. 5). Le serveur SERV 100 construit alors les informations demandées, à partir des rapports de mesure retournés par les autres points d'accès AP de la communauté. Puis, dans une étape 404, le serveur SERV 100 transmet à la passerelle résidentielle RGW2 112 un message REP_INF, qui inclut lesdites informations. Chaque point d'accès AP de la communauté est configuré pour faire de même.

A noter que par application du même principe que décrit ci-dessus en relation avec les étapes 402 à 404, un point d'accès AP de la communauté peut requérir auprès du serveur SERV 100 des informations, telles que des mesures actualisées de charge opérationnelle, concernant un ou plusieurs autres points d'accès AP précis de la communauté (tels que connus grâce à la liste L dont la construction est détaillée ci-après en relation avec la Fig. 5). Le message REQ_INF indique alors ledit ou lesdits autres points d'accès AP visés. Le serveur SERV 100 demande alors audit ou auxdits autres points d'accès AP d'effectuer des mesures de charge opérationnelle dans l'étape 403. Le message REP_INF inclut alors les informations demandées vis-à-vis dudit ou desdits autres points d'accès AP.

La **Fig. 5** illustre schématiquement des échanges de messages dans le cadre d'une initialisation de listes relatives à des points d'accès AP dans le voisinage d'un autre point d'accès AP de la communauté.

Dans une étape 501, le serveur SERV 100 détecte l'activation d'un point d'accès AP de la communauté. Cette détection fait suite à l'authentification déjà décrite en relation avec la Fig. 3. Considérons à titre illustratif que le serveur SERV 100 détecte l'activation d'un point d'accès AP intégré à la passerelle résidentielle RGW1 111.

Dans une étape 502, le serveur SERV 100 construit la liste L évoquée en relation avec la Fig. 4. La liste L est construite en sélectionnant tous les points d'accès AP de la communauté dont l'adresse géographique (exacte ou supposée) se situe dans un rayon prédéfini du point d'accès AP détecté à l'étape 501. La liste L inclut préférentiellement en outre un identifiant, par exemple SSID, attendu de chaque réseau WLAN communautaire supposé avoir été créé par les points d'accès AP listés.

Dans une étape 503, le serveur SERV 100 envoie un message de requête REQ_SCAN à la passerelle résidentielle RGW1 111. Le message de requête REQ_SCAN instruit la passerelle résidentielle RGW1 111 d'effectuer un balayage (« scan » en anglais) de canaux de communication utilisables par le point d'accès AP de la communauté qui est intégré à la passerelle résidentielle RGW1 111. Le message de requête REQ_SCAN inclut la liste L construite à l'étape 502.

Le message de requête REQ_SCAN peut préciser quel canal de communication est utilisé par chaque point d'accès AP indiqué de la liste L. Le serveur SERV 100 en est dans ce cas informé par chacun point d'accès AP de la communauté à la création du réseau WLAN communautaire concerné, ou pendant l'authentification si le réseau WLAN communautaire a été précédemment créé, ainsi qu'à chaque changement de canal de communication par le point d'accès AP en question. Une information représentative du canal de communication utilisé peut être de plus envoyée par le point d'accès AP en question à chaque notification dudit point d'accès AP qu'une connexion ou déconnexion d'un terminal mobile est intervenue sur le réseau WLAN communautaire considéré.

Dans une étape 504, la passerelle résidentielle RGW1 111 effectue un balayage sur tous les canaux de communication supportés, ou sur les canaux de communication indiqués dans le message de requête REQ_SCAN (s'il y en a), pendant une durée Tscan. Cela permet à la passerelle résidentielle RGW1 111 de rechercher si les points d'accès AP de la liste L sont à portée radio. Cette durée Tscan peut être adaptée à la taille de la liste L et/ou à la quantité de canaux de communication à balayer.

Le balayage peut consister en une phase passive, par détection de balises (« beacon » en anglais) émises par tout point d'accès AP à portée radio, et/ou en une phase active, par envoi de sollicitations PReq (« Probe Requests » en anglais) en spécifiant le nom de réseau WLAN communautaire recherché et écoute d'éventuelles réponses PResp (« Probe Responses » en anglais). A noter que les balises émises incluent une identification du nom de réseau WLAN concerné, et qu'il est donc aisé de filtrer les réseaux WLAN appartenant à la communauté.

Lors du balayage, la passerelle résidentielle RGW1 111 mesure le niveau de signal RSSI relatif au signal ayant permis de détecter chaque point d'accès AP à portée radio, et sauvegarde une information représentative dudit niveau de signal RSSI mesuré en correspondance avec le point d'accès AP concerné.

Dans une étape 505, la passerelle résidentielle RGW1 111 construit une liste Lap comportant une identification de chaque point d'accès AP présent dans la liste L et qui est à portée radio de la passerelle résidentielle RGW1 111, en association avec l'identifiant du réseau WLAN communautaire détecté et le niveau de signal RSSI mesuré pour ledit point d'accès AP.

Dans une étape 506, la passerelle résidentielle RGW1 111 construit une liste Lhp comportant une identification de chaque point d'accès AP présent dans la liste L mais qui n'est pas à portée radio de la passerelle résidentielle RGW1 111 (points d'accès AP non détectés lors du balayage).

Dans une étape optionnelle 507, la passerelle résidentielle RGW1 111 construit une liste Lab comportant une identification de chaque point d'accès AP de la communauté détecté lors du balayage, mais qui n'était pas présent dans la liste L, en association avec l'identifiant du réseau WLAN communautaire détecté.

Dans une étape 508, la passerelle résidentielle RGW1 111 effectue une pondération initiale de chaque point d'accès AP présent dans la liste L en favorisant les points d'accès AP qui sont à portée radio par rapport aux points d'accès AP qui ne sont pas à portée radio. Par exemple, en considérant des poids allant de « 0 » à « 255 », la passerelle résidentielle RGW1 111 attribue un poids inférieur à « 128 » pour les points d'accès AP hors de portée radio (dans la liste Lhp) et un poids supérieur ou égal à « 128 » pour les points d'accès AP à portée radio (dans la liste Lap). La passerelle résidentielle RGW1 111 effectue la pondération initiale en favorisant les points d'accès AP de meilleurs niveaux de signal RSSI mesurés. D'autres critères peuvent être utilisés pour définir lesdits poids.

Dans une étape 509, la passerelle résidentielle RGW1 111 envoie au serveur SERV 100 un message RESP_SCAN, confirmant ainsi l'exécution du balayage. La passerelle résidentielle RGW1 111 inclut dans le message RESP_SCAN les listes Lap et Lhp respectivement construites aux étapes 505 et 506. La passerelle résidentielle RGW1 111 peut en outre inclure dans le message RESP_SCAN la liste Lab obtenue à l'étape 507.

Si la liste Lab obtenue à l'étape 507 n'est pas vide, le serveur SERV 100 peut générer une alarme ou lancer une procédure d'exception. En effet, cela signifie qu'au moins un réseau WLAN communautaire appartenant à la communauté n'était pas identifié par le serveur SERV 100 comme étant à portée de la passerelle résidentielle RGW1 111. Un exemple d'alarme consiste à alerter l'opérateur de télécommunications gérant le serveur SERV 100 de la présence d'un point d'accès étranger, au voisinage de la passerelle résidentielle RGW1 111, qui peut potentiellement usurper des identités de réseau WLAN communautaire (de la communauté gérée par le serveur SERV 100). Un exemple de mesure d'exception est d'effectuer une reconfiguration au niveau du serveur SERV 100 afin de prendre en compte chaque nouvelle relation de voisinage déclarée par la liste Lab, et de transmettre en conséquence, à chaque point d'accès AP concerné, une nouvelle liste L qui lui est propre.

Dans un mode de réalisation particulier, la passerelle résidentielle RGW1 111 inclut dans le message RESP_SCAN des informations représentative de la pondération initiale effectuée à l'étape 508. Sinon, les étapes 508 et 509 peuvent être inversées.

Tous les points d'accès AP qui sont indiqués dans la liste L construite à l'étape 502 doivent être mis à jour pour prendre en compte l'apparition dans la communauté du point d'accès AP intégré à la passerelle résidentielle RGW1. L'algorithme de la Fig. 5 est alors répété à partir de l'étape 502 par le serveur SERV 100 pour chaque point d'accès AP qui était listé dans la liste L transmise à la passerelle résidentielle RGW1 (chacun recevant alors sa propre liste L mise à jour).

De plus, lorsqu'un point d'accès AP de la communauté disparaît, c'est-à-dire que les communications sont rompues entre le serveur SERV 100 et ledit point d'accès AP, l'algorithme de la Fig. 5 est répété pour chaque point d'accès AP qui était listé dans la liste L précédemment transmise au point d'accès AP qui a disparu. L'algorithme de la Fig. 5 est alors répété à partir de l'étape 502 par le serveur SERV 100 pour chaque point d'accès AP qui était listé dans la liste L précédemment transmise au point d'accès AP qui a disparu (chacun recevant alors sa propre liste L mise à jour).

Dans un mode de réalisation particulier, plutôt que d'agir directement sur détection de l'apparition ou de la disparition d'un point d'accès AP de la communauté, le serveur SERV 100 transmet périodiquement aux points d'accès AP de la communauté l'état de la liste L qui leur est associée.

Dans un mode de réalisation particulier, chaque point d'accès AP de la communauté peut effectuer un balayage de son environnement, e.g. périodiquement, sans que le serveur SERV 100 ne le requière, afin de déterminer les caractéristiques de chaque canal de communication (quantité de points d'accès AP présents dans le voisinage, quantité de points d'accès AP de la communauté présents dans le voisinage, niveau de bruit, taux d'occupation du canal de communication, etc.).

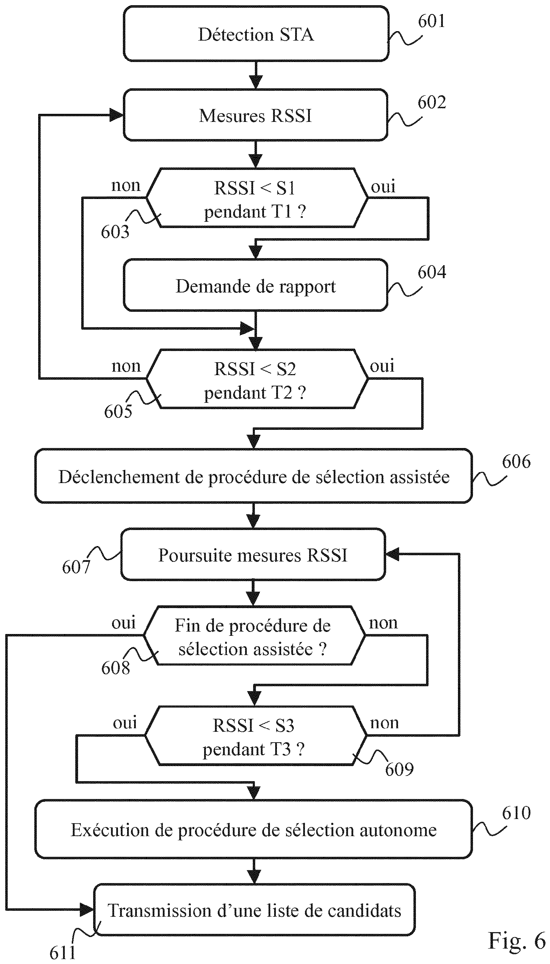

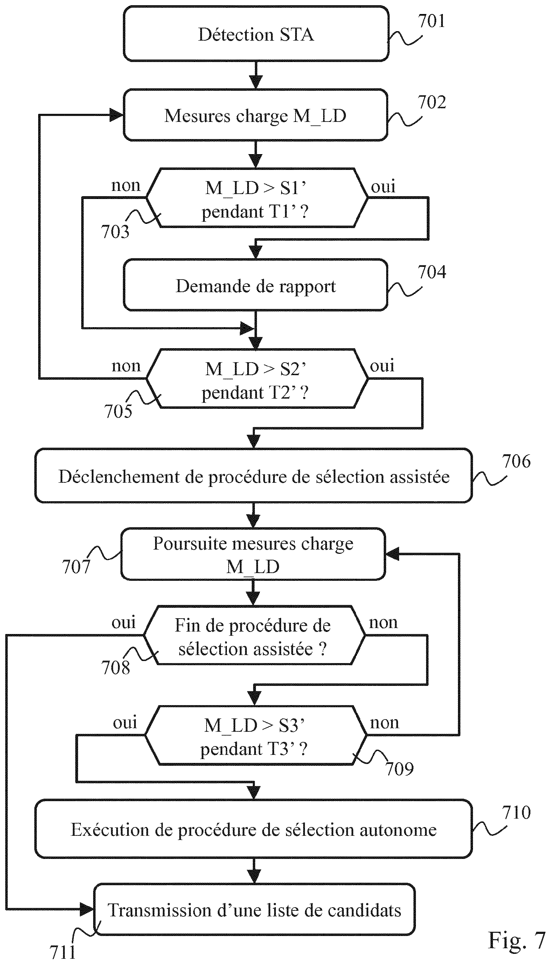

Les Figs. 6 et 7 illustrent schématiquement deux modes de réalisation tels que, dans une procédure de sélection assistée, un point d'accès AP auquel est connecté un terminal mobile construit une liste pondérée Ld en effectuant une pondération prenant en compte des mesures de charge opérationnelle instantanées de points d'accès AP candidats, lesdites mesures étant fournies par le serveur SERV 100 suite au déclenchement de la procédure de sélection assistée, et tels que, dans une procédure de sélection autonome, le point d'accès AP auquel est connecté ledit terminal mobile construit la liste pondérée Ld en effectuant une pondération prenant en compte des statistiques à long-terme de charge opérationnelle desdits points d'accès AP candidats, lesdites statistiques étant fournies précédemment par le serveur.

La **Fig. 6** illustre schématiquement un algorithme d'aide au basculement d'un terminal mobile depuis un premier réseau WLAN de la communauté vers un second réseau WLAN de la communauté, l'algorithme étant implémenté par un point d'accès AP gérant le premier réseau WLAN communautaire, selon un premier mode de réalisation.

Considérons à titre illustratif que le point d'accès AP considéré dans le cadre de l'algorithme de la Fig. 6 est intégré à la passerelle résidentielle RGW1 111.

Dans une étape 601, la passerelle résidentielle RGW1 111 détecte la présence d'un terminal mobile connecté à un réseau WLAN communautaire géré par un point d'accès AP intégré à ladite passerelle résidentielle RGW1 111.

Dans une étape 602, la passerelle résidentielle RGW1 111 effectue des mesures de qualité de communication radio avec ledit terminal mobile, en s'appuyant par exemple sur le niveau de signal RSSI relatif à des signaux reçus en provenance dudit terminal mobile. Si le terminal mobile s'éloigne de la passerelle résidentielle RGW1 111, la qualité de communication radio mesurée par la passerelle résidentielle RGW1 111 baisse au cours du temps. La passerelle résidentielle RGW1 111 est donc capable de déterminer qu'un terminal mobile connecté au réseau WLAN communautaire va potentiellement sortir de la couverture radio dudit réseau WLAN communautaire.

Dans une étape 603, la passerelle résidentielle RGW1 111 vérifie si la qualité de communication radio avec ledit terminal mobile (e.g. RSSI) mesurée est inférieure à un seuil S1 pendant un temps prédéfini T1. Si tel est le cas, la passerelle résidentielle RGW1 111 considère qu'il est nécessaire de collecter des données auprès dudit terminal mobile pour préparer une éventuelle sortie de couverture dudit réseau WLAN communautaire, et une étape 604 est effectuée ; sinon, une étape 605 est effectuée.

Dans l'étape 604, la passerelle résidentielle RGW1 111 demande audit terminal mobile de fournir un rapport de balayage, dans la mesure où ledit terminal mobile supporte cette fonctionnalité. Le balayage peut consister en une phase passive, par détection de balises émises par tout point d'accès AP à portée radio, et/ou en une phase active, par envoi de sollicitations PReq et écoute d'éventuelles réponses PResp. Les procédures des amendements IEEE 802.11k peuvent être utilisées pour ce faire. Pour faciliter la phase active, la passerelle résidentielle RGW1 111 peut fournir audit terminal mobile la liste des points d'accès AP inscrits dans la liste L. La passerelle résidentielle RGW1 111 peut en outre fournir audit terminal mobile une identification des canaux de communication utilisés par les points d'accès AP inscrits dans la liste Lap, et éventuellement une identification des canaux de communication utilisés par les points d'accès AP inscrits dans la liste Lhp si le serveur SERV 100 lui a transmis. Le rapport de balayage inclut une identification de chaque point d'accès AP détecté, le nom de chaque réseau WLAN associé, une information représentative d'une qualité de communication avec ledit point d'accès AP (*e.g.* puissance de réception de signaux en provenance dudit point d'accès AP), préférentiellement une identification de canal de communication utilisé, et préférentiellement un taux d'occupation temporel dudit canal de communication utilisé. Puis l'étape 605 est effectuée.

Dans l'étape 605, la passerelle résidentielle RGW1 111 vérifie si la qualité de communication radio avec ledit terminal mobile (*e.g.* RSSI) mesurée est inférieure à un seuil S2 pendant un temps prédéfini T2. Le seuil S2 est inférieur ou égal au seuil S1. Si tel est le cas, la passerelle résidentielle RGW1 111 considère que ledit terminal mobile est en conditions de sortie de couverture dudit réseau WLAN communautaire, et une étape 606 est effectuée ; sinon, la passerelle résidentielle RGW1 111 continue d'effectuer des mesures de qualité de communication radio avec ledit terminal mobile en réitérant l'étape 602.

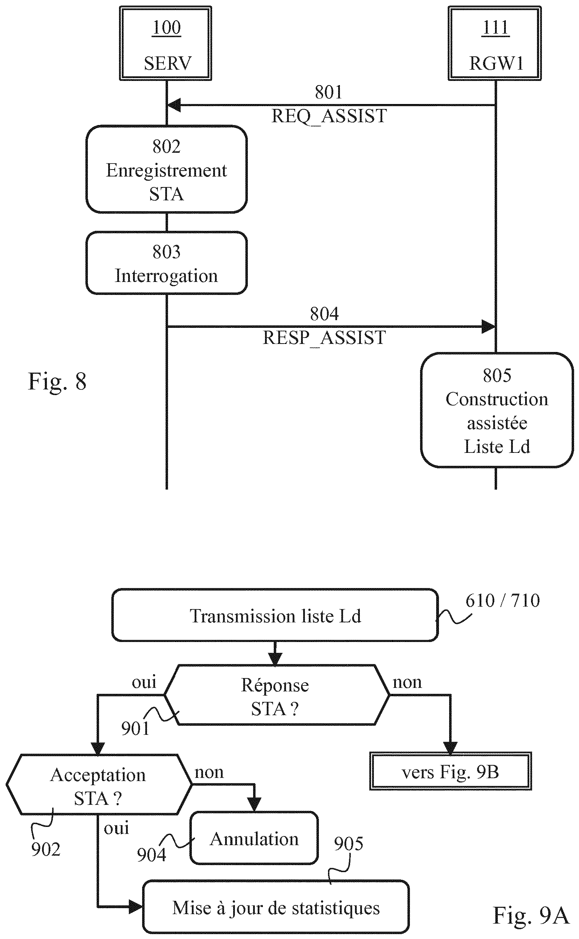

Dans l'étape 606, la passerelle résidentielle RGW1 111 déclenche la procédure de sélection assistée. Cette procédure est une procédure de sélection, qui a pour but de fournir la liste pondérée Ld de points d'accès AP candidats au basculement dudit terminal mobile. Cette procédure de sélection est dite « assistée » en ce que la passerelle résidentielle RGW1 111 requiert l'assistance du serveur SERV 100 pour construire la liste pondérée Ld. Cette procédure de sélection assistée est détaillée ci-après en relation avec la Fig. 8.

Dans une étape 607, la passerelle résidentielle RGW1 111 poursuit les mesures de qualité de communication radio avec ledit terminal mobile, telles que décrites en relation avec l'étape 602.

Dans une étape 608, la passerelle résidentielle RGW1 111 vérifie si la procédure de sélection assistée déclenchée à l'étape 606 a abouti. En d'autres termes, la passerelle résidentielle RGW1 111 vérifie si le serveur SERV 100 a fourni des données pour assister à la construction de la liste pondérée Ld, auquel cas la passerelle résidentielle RGW1 111 a pu construire ladite liste pondérée Ld (voir Fig. 8). Si tel est le cas, une étape 611 est effectuée ; sinon, une étape 609 est effectuée.

Dans l'étape 609, la passerelle résidentielle RGW1 111 vérifie si la qualité de communication radio avec ledit terminal mobile (*e.g.* RSSI) mesurée est inférieure à un seuil S3 pendant un temps prédéfini T3. Le seuil S3 est inférieur au seuil S2. Si tel est le cas, la passerelle résidentielle RGW1 111 considère que ledit terminal mobile est en limite de sortie de couverture dudit réseau WLAN communautaire, et une étape 610 est effectuée ; sinon, la passerelle résidentielle RGW1 111 continue d'effectuer des mesures de qualité de communication radio avec ledit terminal mobile en réitérant l'étape 607.

Dans l'étape 610, la passerelle résidentielle RGW1 111 déclenche la procédure de sélection autonome. Cette procédure est une procédure de sélection, qui a aussi pour but de fournir la liste pondérée Ld de points d'accès AP candidats au basculement dudit terminal mobile, mais la construction de cette liste pondérée Ld n'est alors pas assistée directement par le serveur SERV 100, seules les statistiques long-terme pouvant alors aider la passerelle résidentielle RGW1 111. Cette procédure de sélection autonome est détaillée ci-après. A l'issue de la procédure de sélection autonome, la passerelle résidentielle RGW1 111 a pu construire ladite liste pondérée Ld. Puis l'étape 611 est effectuée.

Dans l'étape 611, la passerelle résidentielle RGW1 111 envoie audit terminal mobile la liste pondérée Ld. Ledit terminal mobile dispose ainsi d'une liste de points d'accès AP de la communauté vers lesquels un basculement du terminal mobile peut être effectué, avec un poids associé à chaque point d'accès AP dans la liste pondérée Ld pour faciliter la prise de décision par ledit terminal mobile.

A noter que dans l'éventualité où la durée T1 est supérieure à la durée T2 alors que les seuils S1 et S2 sont égaux, l'algorithme rentre dans le cas où le rapport de balayage demandé au terminal mobile peut ne pas être disponible pour construire la liste pondérée Ld et la pondération est alors faite sans rapport de balayage.

La **Fig. 7** illustre schématiquement un algorithme d'aide au basculement d'un terminal mobile depuis un premier réseau WLAN de la communauté vers un second réseau WLAN de la communauté, l'algorithme étant implémenté par un point d'accès AP gérant le premier réseau WLAN communautaire, selon un second mode de réalisation. L'algorithme de la Fig. 7 peut être implémenté en alternative ou en complément de celui de la Fig. 6.

Considérons à titre illustratif que le point d'accès AP considéré dans le cadre de l'algorithme de la Fig. 7 est intégré à la passerelle résidentielle RGW1 111.

Dans une étape 701, la passerelle résidentielle RGW1 111 détecte la présence d'un terminal mobile connecté à un réseau WLAN communautaire géré par ledit point d'accès AP intégré à ladite passerelle résidentielle RGW1 111.

Dans une étape 702, la passerelle résidentielle RGW1 111 effectue des mesures de charge opérationnelle de ladite passerelle résidentielle RGW 111. La passerelle résidentielle RGW1 111 va chercher à déterminer que ladite passerelle résidentielle RGW1 111 tend vers sa limite opérationnelle et qu'un basculement du terminal mobile serait souhaitable pour relâcher la contrainte opérationnelle de ladite passerelle résidentielle RGW 111.

Dans une étape 703, la passerelle résidentielle RGW1 111 vérifie si la charge opérationnelle mesurée est supérieure à un seuil S1' pendant un temps prédéfini T1'. Si tel est le cas, la passerelle résidentielle RGW1 111 considère qu'il est nécessaire de collecter des données auprès dudit terminal mobile pour préparer une éventuelle surcharge de la passerelle résidentielle RGW1 111, et une étape 704 est effectuée ; sinon, une étape 705 est effectuée.

Dans l'étape 704, la passerelle résidentielle RGW1 111 demande audit terminal mobile de fournir un rapport de balayage. Le balayage peut consister en une phase passive, par détection de balises émises par tout point d'accès AP à portée radio, et/ou en une phase active, par envoi de sollicitations PReq et écoute d'éventuelles réponses PResp. Les procédures des amendements IEEE 802.11k peuvent être utilisées pour ce faire. Pour faciliter la phase active, la passerelle résidentielle RGW1 111 peut fournir audit terminal mobile la liste des points d'accès AP inscrits dans la liste L. La passerelle résidentielle RGW1 111 peut en outre fournir audit terminal mobile une identification des canaux de communication utilisés par les points d'accès AP inscrits dans la liste Lap, et éventuellement une identification des canaux de communication utilisés par les points d'accès AP inscrits dans la liste Lhp si le serveur SERV 100 lui a transmis. Le rapport de balayage inclut une identification de chaque point d'accès AP détecté, le nom de chaque réseau WLAN correspondant, une information représentative d'une qualité de communication avec ledit point d'accès AP (*e.g.* puissance de réception de signaux en provenance dudit point d'accès AP), préférentiellement une identification de canal de communication utilisé, et préférentiellement un taux d'occupation temporel dudit canal de communication utilisé. Puis l'étape 705 est effectuée.

Dans l'étape 705, la passerelle résidentielle RGW1 111 vérifie si la charge opérationnelle mesurée est supérieure à un seuil S2' pendant un temps prédéfini T2'. Le seuil S2' est supérieur ou égal au seuil S1'. Si tel est le cas, la passerelle résidentielle RGW1 111 considère être en conditions de survenue de surcharge, et une étape 706 est effectuée; sinon, la passerelle résidentielle RGW1 111 continue d'effectuer des mesures de charge opérationnelle en réitérant l'étape 702.

Dans l'étape 706, la passerelle résidentielle RGW1 111 déclenche la procédure de sélection assistée. La passerelle résidentielle RGW1 111 requiert ainsi l'assistance du serveur SERV 100 pour construire la liste pondérée Ld à transmettre au terminal mobile. Comme déjà indiqué, cette procédure de sélection assistée est détaillée ci-après en relation avec la Fig. 8.

Dans une étape 707, la passerelle résidentielle RGW1 111 poursuit les mesures de charge opérationnelle de ladite passerelle résidentielle RGW 111.

Dans une étape 708, la passerelle résidentielle RGW1 111 vérifie si la procédure de sélection assistée déclenchée à l'étape 706 a abouti. En d'autres termes, la passerelle résidentielle RGW1 111 vérifie si le serveur SERV 100 a fourni des données pour assister à la construction de la liste pondérée Ld, auquel cas la passerelle résidentielle RGW1 111 a pu construire ladite liste pondérée Ld (voir Fig. 8). Si tel est le cas, une étape 711 est effectuée ; sinon, une étape 709 est effectuée.

Dans l'étape 709, la passerelle résidentielle RGW1 111 vérifie si la charge opérationnelle mesurée est supérieure à un seuil S3' pendant un temps prédéfini T3'. Le seuil S3' est inférieur au seuil S2'. Si tel est le cas, la passerelle résidentielle RGW1 111 considère être en limite de surcharge, et une étape 710 est effectuée; sinon, la passerelle résidentielle RGW1 111 continue d'effectuer des mesures de charge opérationnelle en réitérant l'étape 707.

Dans l'étape 710, la passerelle résidentielle RGW1 111 déclenche la procédure de sélection autonome. La procédure de sélection autonome est détaillée ci-après. A l'issue de la procédure de sélection autonome, la passerelle résidentielle RGW1 111 a pu construire ladite liste pondérée Ld. Puis l'étape 711 est effectuée.

Dans l'étape 711, la passerelle résidentielle RGW1 111 envoie audit terminal mobile la liste pondérée Ld. Ledit terminal mobile dispose ainsi d'une liste de points d'accès AP de la communauté vers lesquels un basculement du terminal mobile peut être effectué, avec un poids associé à chaque point d'accès AP dans la liste pondérée Ld pour faciliter la prise de décision par ledit terminal mobile.

Le terminal mobile auquel il est fait référence dans le cadre de l'algorithme de la Fig. 7 est par exemple un terminal mobile arbitrairement choisi parmi ceux connectés au point d'accès AP de la passerelle résidentielle RGW1 111. Selon un autre exemple, ledit terminal mobile est celui qui présente la moins bonne qualité de communication (e.g. RSSI) avec le point d'accès AP de la passerelle résidentielle RGW1 111. Selon encore un autre exemple, ledit terminal mobile est celui qui contribue le plus à la charge opérationnelle de la passerelle résidentielle RGW1 111, et plus particulièrement à la charge opérationnelle côté WAN.

A noter que dans l'éventualité où la durée T1' est supérieure à la durée T2' alors que les seuils S1' et S2' sont égaux, l'algorithme rentre dans le cas où le rapport de balayage demandé au terminal mobile peut ne pas être disponible pour construire la liste pondérée Ld et la pondération est alors faite sans rapport de balayage.

Que ce soit dans le cadre de l'algorithme de la Fig. 6 ou dans celui de la Fig. 7, tout terminal mobile qui reçoit la liste pondérée Ld reste maître de la décision de basculement. Ledit terminal mobile peut d'ailleurs décider de ne pas effectuer de basculement et de rester connecté à la passerelle résidentielle RGW1 111. En cas de basculement, le terminal mobile est libre de ne pas basculer vers le point d'accès AP de la liste pondérée Ld qui présente le poids le plus élevé. En effet, le terminal mobile peut prendre en compte d'autres critères inconnus du point d'accès AP (*e.g.*

préférences utilisateur).

La **Fig. 8** illustre schématiquement des échanges de messages dans le cadre de la procédure de sélection de réseaux WLAN candidats au basculement assistée par le serveur SERV 100 (procédure de sélection assistée).

Considérons à titre illustratif que le point d'accès AP considéré dans le cadre de l'algorithme de la Fig. 8 est intégré à la passerelle résidentielle RGW1 111.

Dans une étape 801, la passerelle résidentielle RGW1 111 envoie au serveur SERV 100 un message de requête d'assistance REQ_ASSIST. Par le biais de ce message REQ_ASSIST, la passerelle résidentielle RGW1 111 notifie au serveur SERV 100 qu'un terminal mobile, identifié dans le message REQ_ASSIST, va sans doute lui être désassocié et que la passerelle résidentielle RGW1 111 désire récupérer des informations de charge opérationnelle actuelle des points d'accès AP du voisinage, afin d'affiner la liste pondérée Ld de candidats qu'il compte proposer au terminal mobile pour effectuer un basculement. La passerelle résidentielle RGW1 111 peut également indiquer dans le message REQ_ASSIST les poids actuellement affectés à chaque point d'accès AP de la liste de voisins L précédemment fournie par le serveur SERV 100, plus particulièrement si ces poids ont changé depuis la précédente exécution de l'algorithme de la Fig. 5.

Dans une étape 802, le serveur SERV 100 enregistre l'identifiant du terminal mobile en question, afin de noter que le terminal mobile en question devrait bientôt basculer vers un autre réseau (potentiellement un réseau WLAN communautaire).

Le serveur SERV 100 va alors interroger les points d'accès AP de la liste L associée au point d'accès intégré à la passerelle résidentielle RGW1 111. Afin de réduire le nombre de requêtes, le serveur SERV 100 peut interroger uniquement les points d'accès AP à portée radio de la passerelle résidentielle RGW1 111, tels qu'indiqués dans la liste Lap associée au point d'accès intégré à la passerelle résidentielle RGW1 111.

Dans un mode de réalisation particulier, le serveur SERV 100 utilise les poids fournis par la passerelle résidentielle RGW1 111 dans le message REQ_ASSIST ou ceux fournis à l'issue de l'algorithme de la Fig. 5. Par exemple, le serveur SERV 100 interroge une quantité prédéfinie $N > 0$ de points d'accès AP de ladite liste L ou de ladite liste Lap, les points d'accès AP interrogés étant ceux pour lesquels les plus forts poids ont été attribués préliminairement par la passerelle résidentielle RGW1 111. Selon un autre exemple, le serveur SERV 100 interroge les points d'accès AP de ladite liste L ou de ladite liste Lap auxquels la passerelle résidentielle RGW1 111 a préliminairement attribué des poids supérieurs à un seuil SP prédéfini.

Ainsi, dans une étape 803, le serveur SERV 100 interroge lesdits points d'accès AP, en leur demandant des informations de charge opérationnelle actuelle (voir Fig. 3) et en leur demandant s'ils ont détecté récemment ledit terminal mobile via des messages de sollicitation PReq susmentionnés auxquels lesdits points d'accès AP sont supposés avoir répondu avec des réponses PResp. A noter que lesdits points d'accès AP gardent des traces relatives aux terminaux mobiles desquels lesdits points d'accès AP ont reçu des messages de sollicitation PReq. De telles traces sont effacées après expiration d'une durée prédéfinie d'obsolescence. Dans un mode de réalisation particulier, le serveur SERV 100 précise qu'il attend une réponse desdits points d'accès AP au maximum à l'expiration d'une durée T4 pour les informations de charge opérationnelle et au maximum à l'expiration d'une durée T5 pour la détection dudit terminal mobile. Le serveur SERV 100 peut aussi demander un retour dès que possible (par exemple en indiquant une valeur nulle pour la durée T4 et/ou la durée T5). Si les informations de charges opérationnelles pour certains points d'accès AP ont été récemment obtenues (*i.e.* précédemment obtenues dans un temps inférieur à une durée prédéfinie T6 avant la réception du message REQ_ASSIST, *e.g.* par retour périodique), alors le serveur SERV 100 peut se dispenser d'interroger ces points d'accès AP sur leurs informations de charge opérationnelle et uniquement les interroger sur leur détection ou non dudit terminal mobile, et utiliser à la place les dernières informations de charge opérationnelle à sa disposition. Autrement, le serveur SERV 100 demande spécifiquement à ces points d'accès AP qu'ils leur remontent leurs informations de charge opérationnelle.

Chaque point d'accès AP interrogé par le serveur SERV 100 à propos d'informations de charge opérationnelle renvoie alors ces informations au serveur SERV 100 au plus tard à l'expiration d'une temporisation initialisée avec la valeur T4. Chaque point d'accès AP interrogé par le serveur SERV 100 à propos d'une détection dudit terminal mobile renvoie alors sa réponse au plus tard à l'expiration d'une temporisation initialisée avec la valeur T5. Si ledit point d'accès AP cible a détecté ledit terminal mobile, alors ledit point d'accès AP répond par la positive en horodatant la détection dudit terminal mobile, et en indiquant éventuellement un niveau de signal RSSI de signaux reçus en provenance dudit terminal mobile ; sinon ledit point d'accès AP répond par la négative, voire ne répond pas.

Dans une étape 804, le serveur SERV 100 envoie à la passerelle résidentielle RGW1 111 un message RESP_ASSIST qui inclut les informations de charge opérationnelle obtenues à l'étape 803. Le serveur SERV 100 indique préférentiellement quels points d'accès AP ont détecté ledit terminal mobile, ainsi qu'une information représentative de l'instant auquel ledit terminal mobile a été détecté. Le serveur SERV 100 envoie le message RESP ASSIST après expiration d'un temps $T7 \geq \max(T4, T5)$. Si le serveur SERV 100 n'a pas reçu de réponse d'un des points d'accès AP à l'étape 803 avant la fin de la durée T4 et/ou T5, le serveur SERV 100 ne transmet pas les informations concernées à la passerelle résidentielle RGW1 111. A noter que l'échange de messages REQ_ASSIST et RESP_ASSIST est un cas particulier de l'échange de messages REQ_INF et RESP_INF déjà décrit en relation avec la Fig. 4.

Dans une étape 805, la passerelle résidentielle RGW1 111 construit la liste pondérée Ld en utilisant les données contenues dans le message RESP_ASSIST. En d'autres termes, la passerelle résidentielle RGW1 111 effectue une construction assistée de la liste pondérée Ld. La passerelle résidentielle RGW1 111 utilise en outre, si disponible, le rapport de balayage demandé à l'étape 604 ou 704 au terminal mobile en question. Pour chaque point d'accès AP candidat au basculement, la passerelle résidentielle RGW1 111 associe un poids P préférentiellement calculé à partir d'un ensemble de métriques de la façon suivante :

- le poids P dépend du poids attribué audit point d'accès lors de la pondération initiale effectuée sur réception de la liste L (voir Fig. 5) et/ou du poids dernièrement attribué audit point d'accès lors de la dernière création de liste pondérée Ld par la passerelle résidentielle RGW1 111 ;
- le poids P dépend de la charge opérationnelle de l'interface de communication côté WAN dudit point d'accès AP, moins l'interface de communication côté WAN est chargée plus le poids P est élevé ;
- le poids P dépend de la charge opérationnelle de l'interface de communication côté WLAN dudit point d'accès AP, moins l'interface de communication côté WLAN est chargée plus le poids P est élevé ;
- le poids P dépend du niveau de signal RSSI avec lequel ledit point d'accès AP voit ledit terminal mobile, plus le niveau de signal RSSI est élevé plus le poids P est élevé, par exemple en capant la valeur V_RSSI du niveau de signal RSSI dans un intervalle [-RSSImin ; RSSImax] et en appliquant la formule suivante

$$max(0, min(1, (V\_RSSI - RSSImin) / (RSSImax ; RSSImin))$$

sachant que cette valeur est ici quantifiée sur l'intervalle [0,1] (comme le seraient alors les autres valeurs prises en compte pour le calcul du poids P) et est nulle si le niveau de signal RSSI pour ce point d'accès AP n'est pas disponible dans le message RESP_ASSIST ;
- le poids P dépend du niveau de signal RSSI avec lequel ledit terminal mobile voit ledit point d'accès AP d'après le rapport de balayage, plus le niveau de signal RSSI est élevé plus le poids P est élevé, par exemple en capant la valeur V_RSSI' du niveau de signal RSSI dans l'intervalle [-RSSImin ; RSSImax] et en appliquant la formule suivante

$$max(0, min(1, (V\_RSSI' - RSSImin) / (RSSImax ; RSSImin))$$

sachant que cette valeur quantifiée sur l'intervalle [0,1] (comme les autres valeurs prises en compte pour le calcul du poids) et est nulle si le niveau de signal RSSI pour ce point d'accès AP n'est pas disponible dans le rapport de balayage.

Dans un mode de réalisation particulier, ledit poids P dépend en outre d'un taux d'opérations de basculement précédemment réalisées avec succès depuis la passerelle résidentielle RGW1 111 vers ledit point d'accès AP auquel le poids P est associé, plus ce taux est élevé plus le poids P est élevé. Il est aussi possible de faire dépendre le poids P d'une quantité d'opérations de basculement précédemment réalisées avec succès depuis la passerelle résidentielle RGW1 111 vers ledit point d'accès AP auquel le poids P est associé (plus cette quantité est élevée plus le poids P est élevé) et/ou d'une quantité d'opérations de basculement qui ont précédemment échoué depuis la passerelle résidentielle RGW1 111 vers ledit point d'accès AP auquel le poids P est associé (plus cette quantité est élevée moins le poids P est élevé).

Dans un mode de réalisation particulier, lorsque le rapport de balayage demandé à l'étape 604 ou 704 n'est pas disponible, le poids P dépend de l'inverse de la valeur absolue de la différence entre le niveau de signal RSSI mesuré par la passerelle résidentielle RGW1 111 pour des signaux en provenance dudit point d'accès AP auquel le poids P est associé et le niveau de signal RSSI mesuré par la passerelle résidentielle RGW1 111 pour des signaux en provenance dudit terminal mobile.

Chacune de ces métriques sont préférentiellement associées à un coefficient de pondération prédéfini, ce qui permet de privilégier une métrique par rapport à une autre.

Comme évoqué en relation avec les Figs. 6 et 7, dans le cas où la procédure de sélection assistée échoue par manque de temps, la procédure de sélection autonome est exécutée. La passerelle résidentielle RGW1 111 construit alors la liste pondérée Ld en utilisant les données à sa disposition. Pour chaque point d'accès AP candidat au basculement, la passerelle résidentielle RGW1 111 associe alors un poids P' préférentiellement calculé de la façon suivante :

- le poids P' dépend de la statistique (voir étape 401) de charge de l'interface de communication côté WAN dudit point d'accès AP, moins l'interface de communication côté WAN est chargée plus le poids P' est élevé ;

- le poids P' dépend de la statistique (voir étape 401) de charge de l'interface de communication côté WLAN dudit point d'accès AP, moins l'interface de communication côté WLAN est chargée plus le poids P' est élevé ;
- le poids P' dépend du niveau de signal RSSI avec lequel ledit terminal mobile voit ledit point d'accès AP d'après le rapport de balayage, plus le niveau de signal RSSI est élevé plus le poids P' est élevé, par exemple en capant la valeur V_RSSI' du niveau de signal RSSI dans l'intervalle [-RSSImin ; RSSImax] et en appliquant la formule suivante

$$\max(0, \min(1, (V\_RSSI' - RSSImin) / (RSSImax ; RSSImin))$$

sachant que cette valeur est quantifiée sur l'intervalle [0,1] (comme le seraient alors les autres valeurs prises en compte pour le calcul du poids P') et est nulle si le niveau de signal RSSI pour ce point d'accès AP n'est pas disponible dans le rapport de balayage.

Dans un mode de réalisation particulier, ledit poids P' dépend en outre d'un taux d'opérations de basculement précédemment réalisées avec succès depuis la passerelle résidentielle RGW1 111 vers ledit point d'accès AP auquel le poids P' est associé, plus ce taux est élevé plus le poids P' est élevé. Il est aussi possible de faire dépendre le poids P' d'une quantité d'opérations de basculement précédemment réalisées avec succès depuis la passerelle résidentielle RGW1 111 vers ledit point d'accès AP auquel le poids P' est associé (plus cette quantité est élevée plus le poids P' est élevé) et/ou d'une quantité d'opérations de basculement qui ont précédemment échoué depuis la passerelle résidentielle RGW1 111 vers ledit point d'accès AP auquel le poids P' est associé (plus cette quantité est élevée moins le poids P' est élevé).

Dans un mode de réalisation particulier, lorsque le rapport de balayage demandé à l'étape 604 ou 704 n'est pas disponible, le poids P' dépend de l'inverse de la valeur absolue de la différence entre le niveau de signal RSSI mesuré par la passerelle résidentielle RGW1 111 pour des signaux en provenance dudit point d'accès AP auquel le poids P' est associé et le niveau de signal RSSI mesuré par la passerelle résidentielle RGW1 111 pour des signaux en provenance dudit terminal mobile.

Comme dans le cadre de la procédure de sélection assistée, chacune de ces métriques sont préférentiellement associées à un coefficient de pondération prédéfini, ce qui permet de privilégier une métrique par rapport à une autre.

Que ce soit selon la procédure de sélection assistée ou selon la procédure de sélection autonome, la passerelle résidentielle RGW1 111 construit la liste pondérée Ld en y indiquant un ou plusieurs points d'accès AP de la communauté vers lequel le terminal mobile en question peut basculer. Chaque point d'accès AP listé y est associé avec le poids P ou P' que la passerelle résidentielle RGW1 111 a calculé pour ledit point d'accès AP. Dans la liste pondérée Ld, le poids P ou P' peut être normalisé sur la plage [0 ; 255] pour faciliter sa transmission dans une trame de type IEEE 802.11v. La passerelle résidentielle RGW1 111 peut choisir de limiter la quantité de points d'accès AP listés dans la liste pondérée Ld transmise, pour limiter la taille de la trame nécessaire à l'envoi de la liste pondérée Ld au terminal mobile en question.

Dans un mode de réalisation particulier, lorsqu'un rapport de balayage a été reçu du terminal mobile en question dans le cadre de l'étape 604 ou de l'étape 704, la liste pondérée Ld transmise au terminal mobile ne liste que des points d'accès AP qui ont été détectés par ledit terminal mobile lors du balayage.

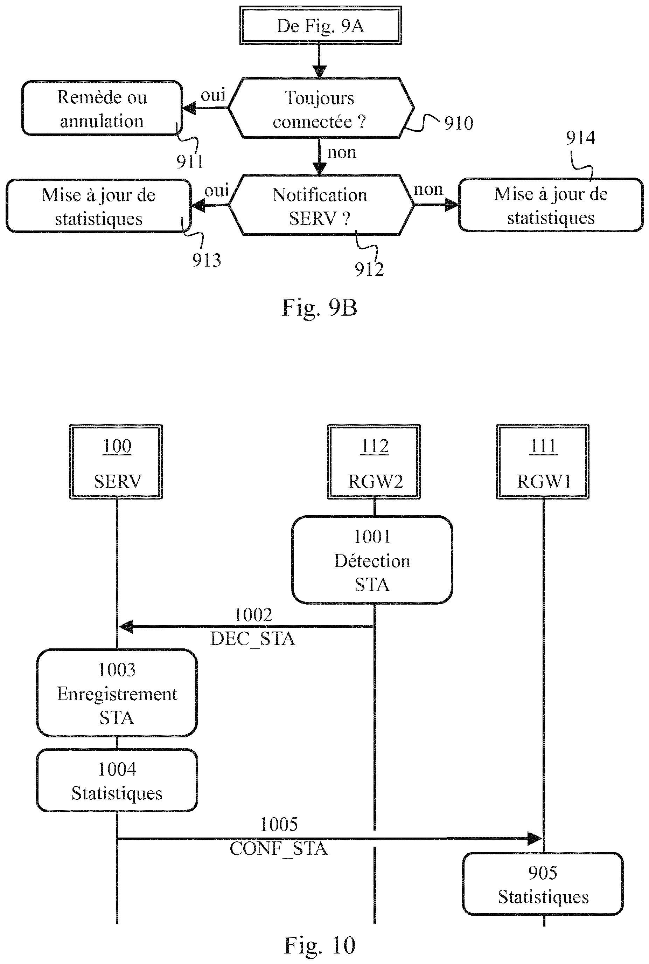

Les **Figs. 9A** et **9B** illustrent schématiquement un algorithme de suivi de basculement d'un terminal mobile depuis un premier réseau WLAN communautaire vers un second réseau WLAN communautaire, l'algorithme étant implémenté par un point d'accès AP gérant le premier réseau WLAN communautaire.

Considérons à titre illustratif que l'algorithme des Figs. 9A et 9B est implémenté par le point d'accès AP intégré à la passerelle résidentielle RGW1 111.

Comme détaillé ci-dessus en relation avec les Figs. 6 et 7, la passerelle résidentielle RGW1 111 transmet la liste pondérée Ld dans l'étape 610 ou 710 respectivement.

Dans une étape 901 suivante, la passerelle résidentielle RGW1 111 vérifie si ladite passerelle résidentielle RGW1 111 a reçu une réponse du terminal mobile en question avant l'expiration d'une durée prédéfinie. Si tel est le cas, une étape 902 est effectuée ; sinon, une étape 910 est effectuée (sur Fig. 9B).

Dans l'étape 902, la passerelle résidentielle RGW1 111 vérifie si le terminal mobile a indiqué dans sa réponse avoir accepté le basculement vers un autre réseau WLAN communautaire, et auquel cas, vers quel réseau WLAN communautaire. Si tel est le cas, une étape 905 est effectuée ; sinon, une étape 904 est effectuée.

Dans l'étape 904, la passerelle résidentielle RGW1 111 annule le basculement. La passerelle résidentielle RGW1 peut mettre à jour des statistiques locales en conséquence.

Dans l'étape 905, la passerelle résidentielle RGW1 111 met à jour des statistiques locales, pour enregistrer qu'un basculement a été opéré depuis le réseau WLAN communautaire géré par le point d'accès AP intégré à la passerelle résidentielle RGW1 111 vers un autre réseau WLAN. A noter que le terminal mobile en question peut basculer vers un autre réseau WLAN n'appartenant pas à la communauté, mais en avertir tout de même la passerelle résidentielle RGW1 111.

Dans l'étape 910, la passerelle résidentielle RGW1 111 vérifie si le terminal mobile en question est toujours connecté au réseau WLAN communautaire géré par le point d'accès AP intégré à la passerelle résidentielle RGW1 111. Si tel est le cas, une étape 911 est effectuée ; sinon, une étape 912 est effectuée.

Dans l'étape 911, la passerelle résidentielle RGW1 111 annule le basculement si le terminal en question est toujours connecté sans avoir répondu après expiration d'une durée prédéfinie. La passerelle résidentielle RGW1 peut mettre à jour des statistiques locales en conséquence. La passerelle résidentielle RGW1 111 peut aussi appliquer un remède à cette situation. Ainsi, en variante, la passerelle résidentielle RGW1 111 retransmet (jusqu'à un nombre maximum de fois) la liste pondérée Ld au terminal mobile en question. Dans une autre variante, la passerelle résidentielle RGW1 111 décide de transmettre au terminal mobile en question la liste L sans pondération.

Dans l'étape 912, la passerelle résidentielle RGW1 111 vérifie si ladite passerelle résidentielle RGW1 111 a reçu une notification en provenance du serveur SERV 100 avant l'expiration d'une durée prédéfinie T8. Cette notification indique à la passerelle résidentielle RGW1 111 vers quel réseau WLAN communautaire le terminal mobile en question a basculé dans le cas où ledit terminal mobile a décidé de basculé vers un réseau WLAN communautaire. Cet aspect est détaillé ci-après en relation avec la Fig. 10. Si la passerelle résidentielle RGW1 111 a reçu une telle notification, l'étape 913 est effectuée ; sinon, l'étape 914 est effectuée.

Dans l'étape 913, la passerelle résidentielle RGW1 met à jour des statistiques locales en tenant compte des informations contenues dans la notification reçue en provenance du serveur SERV 100, et plus particulièrement en ce qui concerne le point d'accès AP communautaire vers lequel le basculement a été fait, dans le cas où il y a effectivement eu basculement vers un réseau WLAN communautaire.

Dans l'étape 914, la passerelle résidentielle RGW1 met à jour des statistiques locales en tenant compte du fait que le terminal mobile en question a effectué un basculement vers un réseau WLAN qui n'appartient pas à la communauté gérée par le serveur SERV 100 (ou a tout simplement perdu toute connexion à un quelconque réseau WLAN).

La **Fig. 10** illustre schématiquement des échanges de messages dans le cadre d'un basculement de terminal mobile depuis un premier réseau WLAN communautaire vers un second réseau WLAN communautaire.

Considérons à titre illustratif un basculement depuis le réseau WLAN communautaire géré par le point d'accès AP intégré à la passerelle résidentielle RGW1 111 vers le réseau WLAN communautaire géré par le point d'accès AP intégré à la passerelle résidentielle RGW2 112.

Dans une étape 1001, la passerelle résidentielle RGW2 112 détecte la connexion d'un terminal mobile au réseau WLAN communautaire géré par le point d'accès AP intégré à la passerelle résidentielle RGW2 112.

Dans une étape 1002, la passerelle résidentielle RGW2 112 envoie au serveur SERV 100 un message DEC_STA identifiant ledit terminal mobile.

Dans une étape 1003, le serveur SERV 100 enregistre que ledit terminal mobile est désormais connecté au réseau WLAN communautaire géré par le point d'accès AP intégré à la passerelle résidentielle RGW2 112. Si le serveur SERV 100 a enregistré à l'étape 802 que ledit terminal mobile était précédemment connecté au réseau WLAN communautaire géré par le point d'accès AP intégré à la passerelle résidentielle RGW1 111, le serveur SERV 100 sait que ledit terminal mobile a effectué un basculement depuis le réseau WLAN communautaire géré par le point d'accès AP intégré à la passerelle résidentielle RGW1 111 vers le réseau WLAN communautaire géré par le point d'accès AP intégré à la passerelle résidentielle RGW2 112.

A noter que si après une durée T9 prédéfinie le serveur SERV 100 n'a pas été informé que le terminal mobile en question a basculé vers un autre réseau WLAN communautaire, le serveur SERV 100 efface l'enregistrement fait à l'étape 802, et peut éventuellement mettre toutefois à jour des statistiques en conséquence.

Dans une étape 1004, le serveur SERV 100 met à jour des statistiques en conséquence, et dans une étape 1005, le serveur SERV 100 envoie une notification CONF_STA à la passerelle résidentielle RGW1 111 pour l'informer du basculement dudit terminal mobile depuis le réseau WLAN communautaire géré par le point d'accès AP intégré à la passerelle résidentielle RGW1 111 vers le réseau WLAN communautaire géré par le point d'accès AP intégré à la passerelle résidentielle RGW2 112. La passerelle résidentielle RGW1 111 effectue alors l'étape 905 afin de mettre à jour ses statistiques en conséquence.

## Revendications

**1.** Procédé d'aide au basculement d'un terminal mobile (131) depuis un premier réseau local sans-fil communautaire (121) vers un second réseau local sans-fil communautaire (122), les premier et second réseaux locaux sans-fil appartenant à une même communauté et étant gérés par respectivement des premier (111) et second (112) points d'accès offrant un accès à un réseau étendu (120) via lequel est accessible un serveur (100) régissant ladite communauté, **caractérisé en ce que** le premier point d'accès (121) implémente les étapes suivantes :

- effectuer (602 ; 702) des mesures de qualité de communication avec ledit terminal mobile et/ou de charge opérationnelle dudit premier point d'accès ;
- lorsque les mesures indiquent que la qualité de communication avec ledit terminal mobile est inférieure à un premier seuil S2 et/ou respectivement que la charge opérationnelle dudit premier point d'accès est supérieure à un second seuil S2', déclencher (606 ; 706) une procédure de sélection assistée par le serveur ;
- lorsque les mesures indiquent que la qualité de communication avec ledit terminal mobile est inférieure à un troisième seuil S3 qui est inférieur au premier seuil S2 et/ou respectivement que la charge opérationnelle dudit premier point d'accès est supérieure à un quatrième seuil S3' qui est supérieur au second seuil S2', déclencher (610 ; 710) une procédure de sélection autonome ;
- à l'issue de la procédure de sélection assistée par le serveur ou de la procédure de sélection autonome, transmettre (611 ; 711) au terminal mobile une liste pondérée Ld de points d'accès candidats au basculement dudit terminal mobile ;

**en ce que**, dans la procédure de sélection assistée, le premier point d'accès construit la liste pondérée Ld en effectuant une pondération prenant en compte des mesures de charge opérationnelle instantanées desdits points d'accès candidats fournies par le serveur suite au déclenchement de la procédure de sélection assistée,
et **en ce que**, dans la procédure de sélection autonome, le premier point d'accès construit la liste pondérée Ld en effectuant une pondération prenant en compte des statistiques à long-terme de charge opérationnelle desdits points d'accès candidats fournies précédemment par le serveur.

2. Procédé selon la revendication 1, **caractérisé en ce que** le premier point d'accès reçoit (401) périodiquement des mises à jour des statistiques long-terme en provenance du serveur.

3. Procédé selon l'une quelconque des revendications 1 et 2, **caractérisé en ce que** le premier point d'accès implémente les étapes suivantes :

- lorsque les mesures indiquent que la qualité de communication avec ledit terminal mobile est inférieure à un cinquième seuil S1 qui est supérieur ou égal au premier seuil S2 et/ou respectivement que la charge opérationnelle dudit premier point d'accès est supérieure à un sixième seuil S1' qui est inférieur ou égal au second seuil S2', demander (604 ; 704) audit terminal mobile un rapport de balayage indiquant quels points d'accès sont détectés par ledit terminal mobile ; et
- effectuer la pondération prenant en compte le rapport de balayage reçu du terminal mobile.

4. Procédé selon la revendication 3, **caractérisé en ce que** le premier point d'accès liste dans la liste pondérée Ld uniquement des points d'accès détectés par ledit terminal mobile et qui sont indiqués dans le rapport de balayage.

5. Procédé selon l'une quelconque des revendications 3 et 4, **caractérisé en ce que** le premier point d'accès effectue les étapes suivantes :

- recevoir (503) en provenance du serveur une liste L de points d'accès gérant des réseaux locaux sans-fil communautaires appartenant à ladite communauté et dont l'adresse géographique se situe dans un rayon prédéfini dudit premier point d'accès ;
- effectuer un balayage (504) pour créer (505, 506) une liste Lap identifiant quels points d'accès de la liste L sont à portée radio dudit premier point d'accès et une liste Lhp identifiant quels points d'accès de la liste L sont hors de portée radio dudit premier point d'accès ;
- effectuer (508) une pondération initiale en se basant sur les listes Lap et Lhp.

6. Procédé selon la revendication 5, **caractérisé en ce que** le premier point d'accès effectue les étapes suivantes :

- créer (507) une liste Lab identifiant des points d'accès appartenant à ladite communauté qui ont été détectés par ledit premier point d'accès lors du balayage par ledit premier point d'accès et qui n'étaient pas listés dans la liste L ;
- transmettre (509) la liste Lab au serveur.

7. Procédé selon l'une quelconque des revendications 5 et 6, **caractérisé en ce que**, dans la procédure de sélection assistée, le serveur effectue les étapes suivantes :

- demander (803, 311) à chaque point d'accès dans la liste L de fournir des mesures de charge opérationnelle instantanées dudit point d'accès, et de fournir une information indiquant si ledit point d'accès détecte ledit terminal mobile ; et

- informer (804) ledit premier point d'accès des mesures de charge opérationnelle instantanées reçues desdits points d'accès et fournir les informations indiquant respectivement si lesdits point d'accès ont détecté ledit terminal mobile.

8. Procédé selon la revendication 7, **caractérisé en ce que**, dans la procédure de sélection assistée, le premier point d'accès associe à chaque point d'accès listé dans la liste pondérée Ld un poids P calculé à partir d'un ensemble de métriques de la façon suivante :

- le poids P dépend du poids attribué audit point d'accès lors de la pondération initiale et/ou du poids dernièrement attribué audit point d'accès lors de la dernière création de liste pondérée Ld par le premier point d'accès ;
- le poids P dépend de la charge opérationnelle d'une interface de communication côté réseau étendu dudit point d'accès ;
- le poids P dépend de la charge opérationnelle d'une interface de communication côté réseau local sans-fil communautaire dudit point d'accès ;
- le poids P dépend d'un niveau de signal RSSI avec lequel ledit point d'accès détecte ledit terminal mobile ;
- le poids P dépend d'un niveau de signal RSSI avec lequel ledit terminal mobile détecte ledit point d'accès AP d'après le rapport de balayage reçu dudit terminal mobile.

9. Procédé selon la revendication 8, **caractérisé en ce que** ledit poids P dépend en outre d'un taux d'opérations de basculement précédemment réalisées avec succès depuis le premier point d'accès vers le point d'accès auquel le poids P est associé.

10. Procédé selon l'une quelconque des revendications 8 et 9, **caractérisé en ce que**, lorsque le rapport de balayage demandé audit terminal mobile n'est pas disponible, le poids P dépend de l'inverse de la valeur absolue de la différence entre un niveau de signal RSSI mesuré par le premier point d'accès pour des signaux en provenance dudit point d'accès auquel le poids P est associé et un niveau de signal RSSI mesuré par le premier point d'accès pour des signaux en provenance dudit terminal mobile.

11. Procédé selon l'une quelconque des revendications 7 à 10, **caractérisé en ce que**, dans la procédure de sélection autonome, le premier point d'accès associe à chaque point d'accès listé dans la liste pondérée Ld un poids P' calculé à partir d'un ensemble de métriques de la façon suivante :

- le poids P' dépend d'une statistique de charge de l'interface de communication côté réseau étendu dudit point d'accès ;
- le poids P' dépend d'une statistique de charge de l'interface de communication côté réseau local sans-fil communautaire dudit point d'accès ;
- le poids P' dépend d'un niveau de signal RSSI avec lequel ledit terminal mobile détecte ledit point d'accès d'après le rapport de balayage reçu dudit terminal mobile.

12. Procédé selon la revendication 11, **caractérisé en ce que** ledit poids P' dépend en outre d'un taux d'opérations de basculement précédemment réalisées avec succès depuis le premier point d'accès vers le point d'accès auquel le poids P' est associé.

13. Procédé selon l'une quelconque des revendications 11 et 12, **caractérisé en ce que**, lorsque le rapport de balayage demandé audit terminal mobile n'est pas disponible, le poids P' dépend de l'inverse de la valeur absolue de la différence entre un niveau de signal RSSI mesuré par le premier point d'accès pour des signaux en provenance dudit point d'accès auquel le poids P' est associé et un niveau de signal RSSI mesuré par le premier point d'accès pour des signaux en provenance dudit terminal mobile.

14. Procédé selon l'une quelconque des revendications 1 à 13, **caractérisé en ce que**, après basculement du terminal mobile, le second point d'accès informe (1002) le serveur dudit basculement, et **en ce que** le serveur informe (1005) ensuite le premier point d'accès dudit basculement.

15. Procédé selon l'une quelconque des revendications 1 à 14, **caractérisé en ce que** les premier et second réseaux locaux sans-fil communautaires sont de type Wi-Fi.

**16.** Programme d'ordinateur, **caractérisé en ce qu'**il comprend des instructions pour implémenter, par un processeur (200), toutes les étapes du procédé selon la revendication 1, lorsque ledit programme est exécuté par ledit processeur.

**17.** Support de stockage d'informations (203), **caractérisé en ce qu'**il stocke un programme d'ordinateur comprenant des instructions pour implémenter, par un processeur (200), toutes les étapes du procédé selon la revendication 1, lorsque ledit programme est exécuté par ledit processeur.

**18.** Point d'accès (111), dit premier point d'accès, configuré pour aider au basculement d'un terminal mobile (131) depuis un premier réseau local sans-fil communautaire (121) vers un second réseau local sans-fil communautaire (122), les premier et second réseaux locaux sans-fil appartenant à une même communauté et étant gérés par respectivement le premier point d'accès et un second point d'accès (122), les premier et second points d'accès offrant un accès à un réseau étendu (120) via lequel est accessible un serveur (100) régissant ladite communauté, **caractérisé en ce que** le premier point d'accès implémente :

- des moyens pour effectuer (602 ; 702) des mesures de qualité de communication avec ledit terminal mobile et/ou de charge opérationnelle dudit premier point d'accès ;
- lorsque les mesures indiquent que la qualité de communication avec ledit terminal mobile est inférieure à un premier seuil S2 et/ou respectivement que la charge opérationnelle dudit premier point d'accès est supérieure à un second seuil S2', des moyens pour déclencher (606 ; 706) une procédure de sélection assistée par le serveur ;
- lorsque les mesures indiquent que la qualité de communication avec ledit terminal mobile est inférieure à un troisième seuil S3 qui est inférieur au premier seuil S2 et/ou respectivement que la charge opérationnelle dudit premier point d'accès est supérieure à un quatrième seuil S3' qui est supérieur au second seuil S2', des moyens pour déclencher (610 ; 710) une procédure de sélection autonome ;
- à l'issue de la procédure de sélection assistée par le serveur ou de la procédure de sélection autonome, des moyens pour transmettre (611 ; 711) au terminal mobile une liste pondérée Ld de points d'accès candidats au basculement dudit terminal mobile ;

**en ce que**, dans la procédure de sélection assistée, le premier point d'accès implémente des moyens pour construire la liste pondérée Ld en effectuant une pondération prenant en compte des mesures de charge opérationnelle instantanées desdits points d'accès candidats fournies par le serveur suite au déclenchement de la procédure de sélection assistée,

et **en ce que**, dans la procédure de sélection autonome, le premier point d'accès implémente des moyens pour construire la liste pondérée Ld en effectuant une pondération prenant en compte des statistiques à long-terme de charge opérationnelle desdits points d'accès candidats fournies précédemment par le serveur.

**Patentansprüche**

**1.** Verfahren zur Unterstützung der Umschaltung eines mobilen Endgeräts (131) von einem ersten drahtlosen lokalen Netzwerk einer Gemeinschaft (121) auf ein zweites drahtloses lokales Netzwerk einer Gemeinschaft (122), wobei das erste und das zweite drahtlose lokale Netzwerk einer selben Gemeinschaft gehören und durch einen ersten (111) und einen zweiten (112) Zugangspunkt verwaltet werden, die einen Zugang zu einem erweiterten Netzwerk (120) bieten, über das ein Server (100) zugänglich ist, der die Gemeinschaft regelt, **dadurch gekennzeichnet, dass** der erste Zugangspunkt (121) die folgenden Schritte umsetzt:

- Durchführen (602; 702) von Messungen der Qualität der Kommunikation mit dem mobilen Endgerät und/oder der Betriebslast des ersten Zugangspunkts;
- wenn die Messungen angeben, dass die Qualität der Kommunikation mit dem mobilen Endgerät geringer als ein erster Schwellenwert S2 ist und bzw. oder die Betriebslast des ersten Zugangspunkts größer als ein zweiter Schwellenwert S2' ist, Auslösen (606; 706) eines vom Server unterstützten Auswahlverfahrens;
- wenn die Messungen angeben, dass die Qualität der Kommunikation mit dem mobilen Endgerät geringer als ein dritter Schwellenwert S3 ist, der kleiner als der erste Schwellenwert S2 ist, und bzw. oder die Betriebslast des ersten Zugangspunkts größer als ein vierter Schwellenwert S3' ist, der größer als der zweite Schwellenwert S2' ist, Auslösen (610; 710) eines autonomen Auswahlverfahrens;
- am Ende des vom Server unterstützten Auswahlverfahrens oder des autonomen Auswahlverfahrens Übermitteln (611; 711) einer gewichteten Liste Ld von Kandidaten-Zugangspunkten für die Umschaltung des mobilen Endgeräts an das mobile Endgerät; dass im unterstützten Auswahlverfahren der erste Zugangspunkt die gewichtete Liste Ld aufstellt, indem er eine Gewichtung unter Berücksichtigung momentaner Messungen der Betriebslast der Kandidaten-Zugangspunkte durchführt, die vom Server nach Auslösung des unterstützen Auswahlverfahrens bereitgestellt werden,

und dass im autonomen Auswahlverfahren der erste Zugangspunkt die gewichtete Liste Ld aufstellt, indem er eine Gewichtung unter Berücksichtigung der Langzeitstatistiken der Betriebslast der Kandidaten-Zugangspunkte durchführt, die zuvor vom Server bereitgestellt werden.

2. Verfahren nach Anspruch 1, **dadurch gekennzeichnet, dass** der erste Zugangspunkt periodisch Aktualisierungen der Langzeitstatistiken vom Server empfängt (401).

3. Verfahren nach einem der Ansprüche 1 und 2, **dadurch gekennzeichnet, dass** der erste Zugangspunkt die folgenden Schritte umsetzt:

- wenn die Messungen angeben, dass die Qualität der Kommunikation mit dem mobilen Endgerät geringer als ein fünfter Schwellenwert S1 ist, der größer oder gleich dem ersten Schwellenwert S2 ist, und bzw. oder die Betriebslast des ersten Zugangspunkts größer als ein sechster Schwellenwert S1' ist, der kleiner oder gleich dem zweiten Schwellenwert S2' ist, Anfordern (604; 704) eines Abtastberichts, der angibt, welche Zugangspunkte vom mobilen Endgerät erkannt werden, vom mobilen Endgerät; und
- Durchführen der Gewichtung unter Berücksichtigung des vom mobilen Endgerät empfangenen Abtastberichts.

4. Verfahren nach Anspruch 3, **dadurch gekennzeichnet, dass** der erste Zugangspunkt in der gewichteten Liste Ld nur Zugangspunkte auflistet, die vom mobilen Endgerät erkannt werden und im Abtastbericht angegeben sind.

5. Verfahren nach einem der Ansprüche 3 und 4, **dadurch gekennzeichnet, dass** der erste Zugangspunkt die folgenden Schritte durchführt:

- Empfangen (503) einer Liste L von Zugangspunkten, die drahtlose lokale Netzwerke einer Gemeinschaft verwalten, die der Gemeinschaft gehören und deren geografische Adresse sich in einem vordefinierten Umkreis des ersten Zugangspunkts befindet;
- Durchführen einer Abtastung (504) zum Erstellen (505, 506) einer Liste Lap, die benennt, welche Zugangspunkte der Liste L in Funkreichweite des ersten Zugangspunkts liegen, und einer Liste Lhp, die benennt, welche Zugangspunkte der Liste L außerhalb der Funkreichweite des ersten Zugangspunkts liegen;
- Durchführen (508) einer ersten Gewichtung auf der Grundlage der Listen Lap und Lhp.

6. Verfahren nach Anspruch 5, **dadurch gekennzeichnet, dass** der erste Zugangspunkt die folgenden Schritte durchführt:

- Erstellen (507) einer Liste Lab, die Zugangspunkte benennt, die zu der Gemeinschaft gehören und die beim Abtasten durch den ersten Zugangspunkt vom ersten Zugangspunkt erkannt wurden und die nicht in der Liste L aufgelistet waren;
- Übermitteln (509) der Liste Lab an den Server.

7. Verfahren nach einem der Ansprüche 5 und 6, **dadurch gekennzeichnet, dass** im unterstützten Auswahlverfahren der Server die folgenden Schritte durchführt:

- Anfordern (803, 311) von jedem Zugangspunkt in der Liste L, momentane Messungen der Betriebslast des Zugangspunkts bereitzustellen und eine Information bereitzustellen, die angibt, ob der Zugangspunkt das mobile Endgerät erkennt; und
- Informieren (804) des ersten Zugangspunkts über momentane Messungen der Betriebslast, die von den Zugangspunkten empfangen wurden, und Bereitstellen der Informationen, die jeweils angeben, ob die Zugangspunkte das mobile Endgerät erkannt haben.

8. Verfahren nach Anspruch 7, **dadurch gekennzeichnet, dass** im unterstützten Auswahlverfahren der erste Zugangspunkt jedem Zugangspunkt, der in der gewichteten Liste Ld aufgelistet ist, ein Gewicht P zuordnet, das auf der Grundlage eines Satzes von Metriken auf folgende Weise berechnet wird:

- das Gewicht P hängt von dem Gewicht ab, das dem Zugangspunkt bei der ersten Gewichtung zugewiesen wurde, und/oder von dem Gewicht, das bei der letzten Erstellung der gewichteten Liste Ld durch den ersten Zugangspunkt zugewiesen wurde;
- das Gewicht P hängt von der Betriebslast einer Kommunikationsschnittstelle aufseiten des erweiterten Netzwerks des Zugangspunkts ab;
- das Gewicht P hängt von der Betriebslast einer Kommunikationsschnittstelle aufseiten des drahtlosen lokalen Netzwerks der Gemeinschaft des Zugangspunkts ab;
- das Gewicht P hängt von einem RSSI-Signalpegel ab, mit dem der Zugangspunkt das mobile Endgerät erkennt;
- das Gewicht P hängt von einem RSSI-Signalpegel ab, mit dem das mobile Endgerät dem vom mobilen Endgerät empfangenen Abtastbericht zufolge den Zugangspunkt AP erkennt.

9. Verfahren nach Anspruch 8, **dadurch gekennzeichnet, dass** das Gewicht P außerdem von einer Rate von Umschaltvorgängen abhängt, die zuvor vom ersten Zugangspunkt auf den Zugangspunkt, dem das Gewicht P zugeordnet ist, erfolgreich durchgeführt wurden.

10. Verfahren nach einem der Ansprüche 8 und 9, **dadurch gekennzeichnet, dass** bei Nichtverfügbarkeit des vom mobilen Endgerät angeforderten Abtastberichts das Gewicht P vom Kehrwert des absoluten Wertes der Differenz zwischen einem RSSI-Signalpegel, der vom ersten Zugangspunkt für Signale von dem Zugangspunkt, dem das Gewicht P zugeordnet ist, gemessen wird, und einem RSSI-Signalpegel, der vom ersten Zugangspunkt für Signale von dem mobilen Endgerät gemessen wird, abhängt.

11. Verfahren nach einem der Ansprüche 7 bis 10, **dadurch gekennzeichnet, dass** im autonomen Auswahlverfahren der erste Zugangspunkt jedem Zugangspunkt, der in der gewichteten Liste Ld aufgelistet ist, ein Gewicht P' zuordnet, das auf der Grundlage eines Satzes von Metriken auf folgende Weise berechnet wird:

- das Gewicht P' hängt von einer Statistik der Last der Kommunikationsschnittstelle aufseiten des erweiterten Netzwerks des Zugangspunkts ab;
- das Gewicht P' hängt von einer Statistik der Last der Kommunikationsschnittstelle aufseiten des drahtlosen lokalen Netzwerks der Gemeinschaft des Zugangspunkts ab;
- das Gewicht P' hängt von einem RSSI-Signalpegel ab, mit dem das mobile Endgerät dem vom mobilen Endgerät empfangenen Abtastbericht zufolge den Zugangspunkt AP erkennt.

12. Verfahren nach Anspruch 11, **dadurch gekennzeichnet, dass** das Gewicht P' außerdem von einer Rate von Umschaltvorgängen abhängt, die zuvor vom ersten Zugangspunkt auf den Zugangspunkt, dem das Gewicht P' zugeordnet ist, erfolgreich durchgeführt wurden.

13. Verfahren nach einem der Ansprüche 11 und 12, **dadurch gekennzeichnet, dass** bei Nichtverfügbarkeit des vom mobilen Endgerät angeforderten Abtastberichts das Gewicht P' vom Kehrwert des absoluten Wertes der Differenz zwischen einem RSSI-Signalpegel, der vom ersten Zugangspunkt für Signale von dem Zugangspunkt, dem das Gewicht P' zugeordnet ist, gemessen wird, und einem RSSI-Signalpegel, der vom ersten Zugangspunkt für Signale von dem mobilen Endgerät gemessen wird, abhängt.

14. Verfahren nach einem der Ansprüche 1 bis 13, **dadurch gekennzeichnet, dass** nach Umschaltung des mobilen Endgeräts der zweite Zugangspunkt den Server über die Umschaltung informiert (1002) und dass der Server anschließend den ersten Zugangspunkt über die Umschaltung informiert (1005).

15. Verfahren nach einem der Ansprüche 1 bis 14, **dadurch gekennzeichnet, dass** das erste und das zweite drahtlose lokale Netzwerk der Gemeinschaft vom Typ Wi-Fi sind.

16. Computerprogramm, **dadurch gekennzeichnet, dass** es Anweisungen zur Umsetzung aller Schritte des Verfahrens nach Anspruch 1 durch einen Prozessor (200) umfasst, wenn das Programm durch den Prozessor ausgeführt wird.

17. Informationsspeichermedium (203), **dadurch gekennzeichnet, dass** es ein Computerprogramm speichert, das Anweisungen zur Umsetzung aller Schritte des Verfahrens nach Anspruch 1 durch einen Prozessor (200) umfasst, wenn das Programm durch den Prozessor ausgeführt wird.

18. Zugangspunkt (111), erster Zugangspunkt genannt, der dazu konfiguriert ist, die Umschaltung eines mobilen Endgeräts (131) von einem ersten drahtlosen lokalen Netzwerk einer Gemeinschaft (121) auf ein zweites drahtloses lokales Netzwerk einer Gemeinschaft (122) zu unterstützen, wobei das erste und das zweite drahtlose lokale Netzwerk einer selben Gemeinschaft gehören und durch einen ersten bzw. einen zweiten Zugangspunkt (122) verwaltet werden, wobei der erste und der zweite Zugangspunkt einen Zugang zu einem erweiterten Netzwerk (120) bieten, über das ein Server (100) zugänglich ist, der die Gemeinschaft regelt, **dadurch gekennzeichnet, dass** der erste Zugangspunkt Folgendes einsetzt:

- Mittel zum Durchführen (602; 702) von Messungen der Qualität der Kommunikation mit dem mobilen Endgerät und/oder der Betriebslast des ersten Zugangspunkts;
- wenn die Messungen angeben, dass die Qualität der Kommunikation mit dem mobilen Endgerät geringer als ein erster Schwellenwert S2 ist und bzw. oder die Betriebslast des ersten Zugangspunkts höher als ein zweiter Schwellenwert S2' ist, Mittel zum Auslösen (606; 706) eines vom Server unterstützten Auswahlverfahrens;
- wenn die Messungen angeben, dass die Qualität der Kommunikation mit dem mobilen Endgerät geringer als ein dritter Schwellenwert S3 ist, der kleiner als der erste Schwellenwert S2 ist, und bzw. oder die Betriebslast des ersten Zugangspunkts größer als ein vierter Schwellenwert S3' ist, der größer als der zweite Schwellenwert S2' ist, Mittel zum Auslösen (610; 710) eines autonomen Auswahlverfahrens;
- am Ende des vom Server unterstützten Auswahlverfahrens oder des autonomen Auswahlverfahrens Mittel zum Übermitteln (611; 711) einer gewichteten Liste Ld von Kandidaten-Zugangspunkten für die Umschaltung des mobilen Endgeräts an das mobile Endgerät;

dass im unterstützten Auswahlverfahren der erste Zugangspunkt Mittel zum Aufstellen der gewichteten Liste Ld einsetzt, indem er eine Gewichtung unter Berücksichtigung momentaner Messungen der Betriebslast der Kandidaten-Zugangspunkte durchführt, die vom Server nach Auslösung des unterstützen Auswahlverfahrens bereitgestellt werden,
dass im autonomen Auswahlverfahren der erste Zugangspunkt Mittel zum Aufstellen der gewichteten Liste Ld einsetzt, indem er eine Gewichtung unter Berücksichtigung der Langzeitstatistiken der Betriebslast der Kandidaten-Zugangspunkte durchführt, die zuvor vom Server bereitgestellt werden.

## Claims

1. Method for assisting roaming of a mobile terminal (131) from a first community wireless local area network (121) to a second community wireless local area network (122), the first and second wireless local area networks belonging to the same community and being managed by respectively first (111) and second (112) access points offering access to a wide area network (120) via which a server (100) governing said community is accessible, **characterised in that** the first access point (121) implements the following steps:

- making (602; 702) measurements on the quality of communication with said mobile terminal and/or of operational load on said first access point;
- when the measurements indicate that the quality of communication with said mobile terminal is below a first threshold S2 and/or respectively that the operational load on said first access point is above a second threshold S2', triggering (606; 706) a selection procedure assisted by the server;
- when the measurements indicate that the quality of communication with said mobile terminal is below a third threshold S3 that is below the first threshold S2 and/or respectively that the operational load on said first access point is above a fourth threshold S3' that is above the second threshold S2', triggering (610; 710) an autonomous selection procedure;
- at the end of the selection procedure assisted by the server or of the autonomous selection procedure, transmitting (611; 711) to the mobile terminal a weighted list Ld of access points that are candidates for the roaming of said mobile terminal;

**in that**, in the assisted selection procedure, the first access point constructs the weighted list Ld by performing a weighting taking into account instantaneous measurements of operational load on said candidate access points provided by the server following the triggering of the assisted selection procedure,
and **in that**, in the autonomous selection procedure, the first access point constructs the weighted list Ld by performing a weighting taking into account long-term statistics of operational load on said candidate access points provided previously by the server.

2. Method according to claim 1, **characterised in that** the first access point periodically receives (401) updates of the long-term statistics coming from the server.

3. Method according to any one of claims 1 and 2, **characterised in that** the first access point implements the following steps:

   - when the measurements indicate that the quality of communication with said mobile terminal is below a fifth threshold S1 that is higher than or equal to the first threshold S2 and/or respectively that the operational load on said first access point is above a sixth threshold S1' that is below or equal to the second threshold S2', requesting (604; 704) of said mobile terminal a scanning report indicating which access points are detected by said mobile terminal; and
   - performing the weighting taking into account the scanning report received from the mobile terminal.

4. Method according to claim 3, **characterised in that** the first access point lists, in the weighted list Ld, only access points detected by said mobile terminal and which are indicated in the scanning report.

5. Method according to any one of claims 3 and 4, **characterised in that** the first access point performs the following steps:

   - receiving (503), coming from the server, a list L of access points managing community wireless local area networks belonging to said community and the geographical address of which is situated within a predefined radius of said first access point;
   - performing a scanning (504) in order to create (505, 506) a list Lap identifying which access points in the list L are within radio range of said first access point and a list Lhp identifying which access points in the list L are out of radio range of said first access point;
   - performing (508) an initial weighting on the basis of the lists Lap and Lhp.

6. Method according to claim 5, **characterised in that** the first access point performs the following steps:

   - creating (507) a list Lab identifying access points belonging to said community that were detected by said first access point during the scanning by said first access point and which were not listed in the list L;
   - transmitting (509) the list Lab to the server.

7. Method according to any one of claims 5 and 6, **characterised in that**, in the assisted selection procedure, the server performs the following steps:

   - requesting (803, 311) each access point in the list L to provide instantaneous measurements of operational load on said access point, and to provide information indicating whether said access point detects said mobile terminal; and
   - informing (804) said first access point of the instantaneous measurements of operational load received from said access points and providing the information indicating respectively whether said access points have detected said mobile terminal.

8. Method according to claim 7, **characterised in that**, in the assisted selection procedure, the first access point associates, with each access point listed in the weighted list Ld, a weight P calculated from a set of metrics in the following way:

   - the weight P depends on the weight attributed to said access point during the initial weighting and/or on the weight lastly attributed to said access point at the time of the last creation of the weighted list Ld by the first access point;
   - the weight P depends on the operational load on a communication interface on the wide area network side of said access point;
   - the weight P depends on the operational load on a communication interface on the community wireless local area network side of said access point;
   - the weight P depends on an RSSI signal level with which said access point detects said mobile terminal;
   - the weight P depends on an RSSI signal level with which said mobile terminal detects said access point AP according to the scanning report received from said mobile terminal.

9. Method according to claim 8, **characterised in that** said weight P further depends on an amount of roaming operations previously performed successfully from the first access point to the access point with which the weight P is associated.

10. Method according to any one of claims 8 and 9, **characterised in that**, when the scanning report requested of said mobile terminal is not available, the weight P depends on the inverse of the absolute value of the difference between an RSSI signal level measured by the first access point for signals coming from said access point with which the weight P is associated and an RSSI signal level measured by the first access point for signals coming from said mobile terminal.

11. Method according to any one of claims 7 to 10, **characterised in that**, in the autonomous selection procedure, the first access point associates, with each access point listed in the weighted list Ld, a weight P' calculated from a set of metrics in the following manner:

   - the weight P' depends on a statistic of load of the communication interface on the wide area network side of said access point;
   - the weight P' depends on a statistic of load of the communication interface on the community wireless local area network side of said access point;
   - the weight P' depends on an RSSI signal level with which said mobile terminal detects said access point according to the scanning report received from said terminal.

12. Method according to claim 11, **characterised in that** said weight P' further depends on an amount of roaming operations previously performed successfully from the first access point to the access point with which the weight P' is associated.

13. Method according to any one of claims 11 and 12, **characterised in that**, when the scanning report requested of said mobile terminal is not available, the weight P' depends on the inverse of the absolute value of the difference between an RSSI signal level measured by the first access point for signals coming from said access point with which the weight P' is associated and an RSSI signal level measured by the first access point for signals coming from said mobile terminal.

14. Method according to any one of claims 1 to 13, **characterised in that**, after roaming of the mobile terminal, the second access point informs (1002) the server of said roaming, and the server next informs (1005) the first access point of said roaming.

15. Method according to any one of claims 1 to 14, **characterised in that** the first and second community wireless local area networks are of the Wi-Fi type.

16. Computer program, **characterised in that** it comprises instructions for implementing, by a processor (200), all the steps of the method according to claim 1, when said program is executed by said processor.

17. Information storage medium (203), **characterised in that** it stores a computer program comprising instructions for implementing, by a processor (200), all the steps of the method according to claim 1, when said program is executed by said processor.

18. Access point (111), referred to as first access point, configured to assist roaming of a mobile terminal (131) from a first community wireless local area network (121) to a second community wireless local area network (122), the first and second wireless local area networks belonging to the same community and being managed by respectively the first access point and a second access point (122), the first and second access points offering access to a wide area network (120) via which a server (100) governing said community is accessible, **characterised in that** the first access point implements:

   - means for making (602; 702) measurements of quality of communication with said mobile terminal and/or of operational load on said first access point;
   - when the measurements indicate that the quality of communication with said mobile terminal is below a first threshold S2 and/or respectively that the operational load on said first access point is above a second threshold S2', means for triggering (606; 706) a selection procedure assisted by the server;
   - when the measurements indicate that the quality of communication with said mobile terminal is below a third threshold S3 that is below the first threshold S2 and/or respectively that the operational load on said first access point is above a fourth threshold S3' that is above the second threshold S2', means for triggering (610; 710) an autonomous selection procedure;
   - at the end of the selection procedure assisted by the server or of the autonomous selection procedure, means for transmitting (611; 711) to the mobile terminal a weighted list Ld of access points that are candidates for the roaming of said mobile terminal;

**in that**, in the assisted selection procedure, the first access point implements means for constructing the weighted list Ld by performing a weighting taking into account instantaneous measurements of operational load on said candidate access points provided by the server following the triggering of the assisted selection procedure,
and **in that**, in the autonomous selection procedure, the first access point implements means for constructing the weighted list Ld by performing a weighting taking into account long-term statistics of operational load on said candidate access points supplied previously by the server.

Fig. 1

Fig. 2

Fig. 3

Fig. 4

Fig. 5

Fig. 6

Fig. 7

Fig. 8

Fig. 9A

De Fig. 9A

Remède ou annulation ← oui ─ Toujours connectée ? ⟋ 910

911

non

Mise à jour de statistiques ← oui ─ Notification SERV ? ─ non → Mise à jour de statistiques

914

913

912

Fig. 9B

100 SERV

112 RGW2

111 RGW1

1001 Détection STA

1002 DEC_STA

1003 Enregistrement STA

1004 Statistiques

1005 CONF_STA

905 Statistiques

Fig. 10

**EP 3 689 029 B1**

**Documents brevets cités dans la description**

- WO 2006013533 A1
- US 2007076662 A1

- FR 2832895 A1

**Littérature non-brevet citée dans la description**

- **NAM NGUYEN et al.** A Novel WLAN roaming décision and Selection Scheme for Mobile Data Offloading. *Journal of Electrical and Computer Engineering,* Décembre 2015, 1-15